(19) **Europäisches Patentamt**
**European Patent Office**
**Office européen des brevets**

(11) **EP 3 952 355 A1**

(12) **EUROPEAN PATENT APPLICATION**
published in accordance with Art. 153(4) EPC

(43) Date of publication:
**09.02.2022 Bulletin 2022/06**

(21) Application number: **20805441.1**

(22) Date of filing: **14.05.2020**

(51) International Patent Classification (IPC):
**H04W 4/40** *(2018.01)*        **H04W 4/70** *(2018.01)*
**H04W 74/00** *(2009.01)*        **H04W 74/08** *(2009.01)*

(52) Cooperative Patent Classification (CPC):
**H04W 4/40; H04W 4/70; H04W 74/00; H04W 74/08**

(86) International application number:
**PCT/CN2020/090301**

(87) International publication number:
**WO 2020/228784 (19.11.2020 Gazette 2020/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2019 CN 201910399915**

(71) Applicant: **Huawei Technologies Co., Ltd.
Shenzhen, Guangdong 518129 (CN)**

(72) Inventors:
• **FAN, Weiwei
Shenzhen, Guangdong 518129 (CN)**
• **ZHANG, Jiayin
Shenzhen, Guangdong 518129 (CN)**

(74) Representative: **Körber, Martin Hans
Mitscherlich PartmbB
Patent- und Rechtsanwälte
Sonnenstrasse 33
80331 München (DE)**

(54) **COMMUNICATION METHOD AND DEVICE**

(57)      Embodiments of this application provide a communication method and a device, so that a terminal device in a communications system implements sidelink communication in an unlicensed frequency band. In this solution, a network device in the communications system may send configuration information, to indicate a channel access mode used when the terminal device performs sidelink communication in the unlicensed frequency band. After receiving the configuration information, the terminal device that accesses the network device may perform sidelink communication in the unlicensed frequency band based on the channel access mode indicated by the configuration information. According to this solution, the terminal device in the communications system may implement sidelink communication in the unlicensed frequency band.

FIG. 3

**Description**

**CROSS-REFERENCE TO RELATED APPLICATIONS**

This application claims priority to Chinese Patent Application No. 201910399915.7, filed with the China National Intellectual Property Administration on May 14, 2019 and entitled "COMMUNICATION METHOD AND DEVICE", which is incorporated herein by reference in its entirety.

**TECHNICAL FIELD**

This application relates to the field of communications technologies, and in particular, to a communication method and a device.

**BACKGROUND**

With development of communications technologies, starting from 3rd generation partnership project (3rd Generation Partnership Project, 3GPP) release (release) 12, a 4th generation (4th generation, 4G) communications system (that is, a long term evolution (Long Term Evolution, LTE) communications system) may support communication between devices. Such communication may be referred to as device-to-device (Device-to-Device, D2D) communication, or referred to as sidelink (sidelink) communication.

A vehicle-to-everything (vehicle-to-everything, V2X) communications technology is also introduced into a 5th generation (5th generation, 5G) communications system. V2X is mainly used to implement vehicle-to-vehicle communication, vehicle-to-infrastructure (infrastructure) communication, vehicle-to-pedestrian (pedestrian) communication, vehicle-to-network (network) communication, and the like, and such communication is still sidelink communication essentially.

Currently, in the 4G communications system, sidelink communication supports only a licensed (licensed) spectrum resource. However, an unlicensed (unlicensed) spectrum resource is already used in the 4G or 5G communications system, to increase a capacity of the communications system and reduce pressure of a shortage of the licensed spectrum resource. Therefore, in the communications system, how a terminal device implements sidelink communication in an unlicensed frequency band is a problem that needs to be urgently resolved in the communications field.

**SUMMARY**

This application provides a communication method and a device, so that a terminal device in a communications system implements sidelink communication in an unlicensed frequency band.

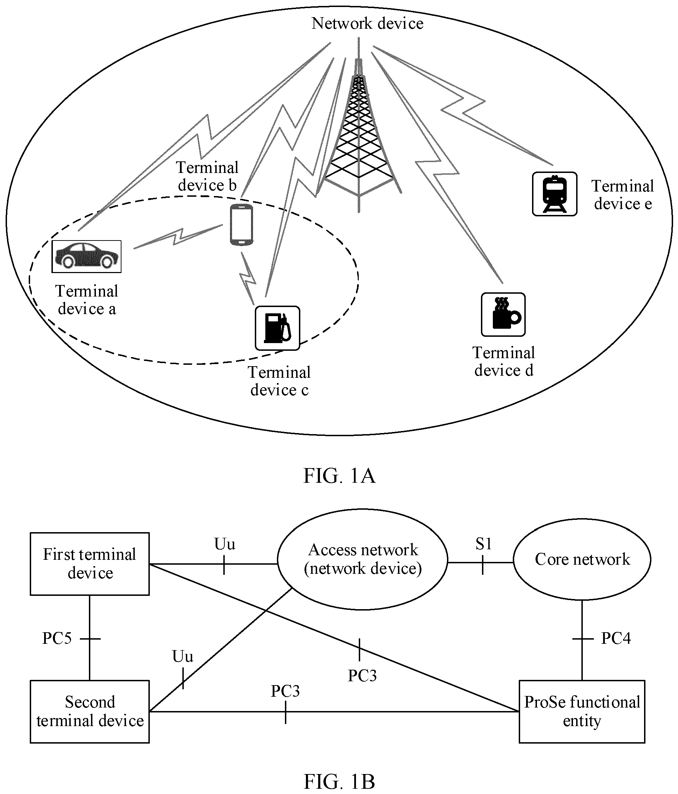

According to a first aspect, this application provides a communication method. The method may be applied to the communications system shown in FIG. 1A or FIG. IB. A system bandwidth in the communications system includes an unlicensed frequency band, and in this case, a network device can use and schedule a spectrum resource in the unlicensed frequency band. The method includes:

The network device in the communications system may send first configuration information, to indicate a channel access mode used when a terminal device performs sidelink communication in the unlicensed frequency band. In this way, after receiving the configuration information, the terminal device that accesses the network device may perform sidelink communication in the unlicensed frequency band based on the channel access mode indicated by the configuration information. According to this solution, the terminal device in the communications system may implement sidelink communication in the unlicensed frequency band.

In a possible design, the channel access mode is a load based equipment LBE mode, a frame based equipment FBE mode, a LoRa mode, or a UNB mode.

According to this design, the communications system may simultaneously support a plurality of channel access modes, and the network device may configure different channel access modes for the terminal device, so that the channel access mode is more flexibly configured for the terminal device in the communications system.

In a possible design, the network device may send the first configuration information in the following manners:

Manner 1: The network device broadcasts the first configuration information.
Manner 2: The network device sends the first configuration information to the terminal device.

According to this design, flexibility of sending the first configuration information by the network device can be improved.

In a possible design, the network device may use broadcast system information to carry the first configuration information, where the system information includes a master information block MIB and/or remaining minimum system information RMSI.

According to this design, the network device may simultaneously configure, by sending system information once, a channel access mode for a plurality of terminal devices that access the network device, to improve configuration efficiency of the network device. In addition, because the network device does not need to add new signaling to send the first configuration information, signaling interaction between the network device and the terminal device can be reduced.

In a possible design, the network device may use broadcast downlink control information DCI to carry the first configuration information, where the DCI is sent through a group common physical downlink control channel GC-PDCCH.

According to this design, the network device may simultaneously configure, by sending DCI once, a channel access mode for a group of terminal devices that access the network device, to improve configuration efficiency of the network device. In addition, because the network device does not need to add new signaling to send the first configuration information, signaling interaction between the network device and the terminal device can be reduced.

In a possible design, the network device may use radio resource control RRC signaling sent to the terminal device to carry the first configuration information.

According to this design, the network device may configure a channel access mode for a single terminal device. In addition, because the network device does not need to add new signaling to send the first configuration information, signaling interaction between the network device and the terminal device can be reduced.

In a possible design, the network device sends second configuration information, where the second configuration information includes at least one or a combination of the following: configuration information of sidelink communication duration, maximum transmit power, and indication information of a frequency domain resource used for sidelink communication, where the frequency domain resource is in the unlicensed frequency band.

According to this design, the network device in the communications system may configure channel access information (a time-frequency resource or power used for channel access) used when the accessed terminal device performs sidelink communication, so that the terminal device can access, based on the channel access information configured by the network device, a channel in the unlicensed frequency band to perform sidelink communication.

In a possible design, the network device sends second configuration information, where the second configuration information includes indication information of at least one bandwidth part BWP used for sidelink communication and at least one or a combination of the following corresponding to each BWP: configuration information of sidelink communication duration, maximum transmit power, and indication information of a frequency domain resource used for sidelink communication in the BWP, where the at least one BWP is in the unlicensed frequency band.

According to this design, the network device in the communications system may configure channel access information corresponding to each BWP, so that the terminal device can use corresponding channel access information when performing sidelink communication in any BWP.

In a possible design, the configuration information of the sidelink communication duration includes a time length of the sidelink communication duration, period information of the sidelink communication duration, and a time offset of the sidelink communication duration relative to a radio frame boundary.

According to this design, the network device may configure the sidelink communication duration, and the terminal device may accurately determine each sidelink communication duration in a radio frame based on the configuration information of the sidelink communication duration.

In a possible design, the configuration information of the sidelink communication duration includes a slot location used for sidelink communication in a time length of a channel occupancy time COT of the network device.

According to this design, the network device may configure the sidelink communication duration, and the terminal device may accurately determine each sidelink communication duration in the COT of the network device based on the configuration information of the sidelink communication duration.

In a possible design, when the channel access mode indicated by the first configuration information is the FBE mode, the second configuration information further includes a time length of a channel occupancy time COT in a fixed frame period FFP and a time length of an idle period (idle period) in the fixed frame period FFP

According to this design, the network device may configure a parameter corresponding to the FBE mode, so that the terminal device can access a channel in the unlicensed frequency band in the manner to perform sidelink communication.

In a possible design, when the channel access mode indicated by the first configuration information is the LBE mode, the second configuration information further includes a plurality of candidate transmission symbols in the sidelink communication duration, where any candidate transmission symbol is used by the terminal device to send sidelink data after listen before talk LBT succeeds.

According to this design, the network device sets a plurality of candidate transmission symbols in each sidelink communication duration, to enable the terminal device to have a plurality of sending opportunities in the sidelink communication duration. In the sidelink communication duration, after LBT succeeds, the terminal device may start to send sidelink data from a latest candidate transmission symbol, and in sidelink communication duration, after the terminal device misses a candidate transmission symbol because LBT fails, there is another sending opportunity to send sidelink data after LBT succeeds. Therefore, according to this design, a channel access probability of the terminal device in the communications system can be improved.

In a possible design, when the channel access mode indicated by the first configuration information is the LBE mode, the second configuration information further includes one transmission symbol in the sidelink communication duration, where the transmission symbol is used by the terminal device to send sidelink data after LBT succeeds.

According to this design, all terminal devices that successfully perform LBT before the transmission symbol may synchronously start to send sidelink data at the transmission symbol. In this way, spatial reuse can be implemented when the terminal device uses the LBE mode.

In a possible design, the network device may send the second configuration information in the following manners:

Manner 1: The network device sends the second configuration information through broadcast.
Manner 2: The network device sends the second configuration information to the terminal device.

According to this design, flexibility of sending the first configuration information by the network device can be improved.

In a possible design, the network device may use broadcast system information to carry the second configuration information, where the system information includes an MIB and/or RMSI.

According to this design, the network device may simultaneously configure, by sending system information once, channel access information for a plurality of terminal devices that access the network device, to improve configuration efficiency of the network device. In addition, because the network device does not need to add new signaling to send the second configuration information, signaling interaction between the network device and the terminal device can be reduced.

In a possible design, the network device may use broadcast downlink control information DCI to carry the second configuration information, where the DCI is sent through a GC-PDCCH.

According to this design, the network device may simultaneously configure, by sending DCI once through the GC-PDCCH, channel access information for a group of terminal devices that access the network device, to improve configuration efficiency of the network device. In addition, because the network device does not need to add new signaling to send the second configuration information, signaling interaction between the network device and the terminal device can be reduced.

In a possible design, the network device may use RRC signaling sent to the terminal device to carry the second configuration information.

According to this design, the network device may configure channel access information for a single terminal device. In addition, because the network device does not need to add new signaling to send the second configuration information, signaling interaction between the network device and the terminal device can be reduced.

In a possible design, the network device may send the first configuration information after receiving a first configuration request from the terminal device. According to this design, this can avoid a problem that computing resources and sending resources on the network device side are wasted because the network device sends the first configuration information when a channel access mode does not need to be configured for the terminal device.

In a possible design, the network device may send the second configuration information after receiving a second configuration request from the terminal device. Optionally, the second configuration request includes service requirement information of the terminal device. According to this design, the network device may dynamically adjust the second configuration information based on the service requirement information in the second configuration request to match a service requirement of the terminal device.

According to a second aspect, this application provides a communication method. The method may be applied to the communications system shown in FIG. 1A or FIG. IB. A system bandwidth in the communications system includes an unlicensed frequency band, and in this case, a network device can use and schedule a spectrum resource in the unlicensed frequency band. The method includes:

A terminal device receives first configuration information from the network device, where the first configuration information indicates a channel access mode used when the terminal device performs sidelink (sidelink) communication in the unlicensed frequency band. Then, the terminal device performs sidelink communication in the unlicensed frequency band based on the channel access mode indicated by the first configuration information.

According to this solution, the terminal device in the communications system may implement sidelink communication in the unlicensed frequency band.

In a possible design, the channel access mode is a load based equipment LBE mode, a frame based equipment FBE mode, a LoRa mode, or a UNB mode.

According to this design, the communications system may simultaneously support a plurality of channel access modes, and the network device may configure different channel access modes for the terminal device, so that the channel access mode is more flexibly configured for the terminal device in the communications system.

In a possible design, the terminal device may receive the first configuration information from the network device in the following manners:

Manner 1: The terminal device receives the first configuration information that is broadcast by the network device.
Manner 2: The terminal device receives the first configuration information sent by the network device to the terminal device.

According to this design, flexibility of sending the first configuration information by the network device can be improved.

In a possible design, the terminal device may obtain the first configuration information from system information that is broadcast by the network device, where the system information includes a master information block MIB and/or remaining minimum system information RMSI.

In a possible design, the terminal device may obtain the first configuration information from downlink control information DCI that is broadcast by the network device, where the DCI is received through a group common physical downlink control channel GC-PDCCH.

In a possible design, the terminal device may obtain the first configuration information from radio resource control RRC signaling received from the network device.

In a possible design, the terminal device may further receive second configuration information from the network device, where the second configuration information includes at least one or a combination of the following: configuration information of sidelink communication duration, maximum transmit power, and indication information of a frequency domain resource used for sidelink communication, where the frequency domain resource is in the unlicensed frequency band. In this way, the terminal device may perform sidelink communication in the unlicensed frequency band based on the second configuration information.

According to this design, the network device may configure channel access information (a time-frequency resource or power used for channel access) used when the terminal device performs sidelink communication.

In a possible design, the terminal device may further receive second configuration information from the network device, where the second configuration information includes indication information of at least one bandwidth part BWP used for sidelink communication and at least one or a combination of the following corresponding to each BWP: configuration information of sidelink communication duration, maximum transmit power, and indication information of a frequency domain resource used for sidelink communication in the BWP, where the at least one BWP is in the unlicensed frequency band. In this way, the terminal device may select one BWP from the at least one BWP, and perform sidelink communication based on channel access information corresponding to the BWP.

According to this design, the network device in the communications system may configure channel access information corresponding to each BWP, so that the terminal device can use corresponding channel access information when performing sidelink communication in any BWP.

For example, when the second configuration information includes the configuration information of the sidelink communication duration, the terminal device performs sidelink communication in the sidelink communication duration based on the channel access mode indicated by the first configuration information.

For another example, when the second configuration information includes the maximum transmit power, the terminal device performs sidelink communication based on the channel access mode indicated by the first configuration information, and the maximum transmit power is not exceeded when the terminal device sends sidelink data.

For another example, when the second configuration information includes the indication information of the frequency domain resource used for sidelink communication, the terminal device performs, by using the frequency domain resource, sidelink communication based on the channel access mode indicated by the first configuration information.

In an implementation, the configuration information of the sidelink communication duration includes a time length of the sidelink communication duration, period information of the sidelink communication duration, and a time offset of first sidelink communication duration relative to a radio frame boundary.

According to this design, the terminal device may accurately determine each sidelink communication duration in a radio frame based on the configuration information of the sidelink communication duration.

In an implementation, the configuration information of the sidelink communication duration includes a slot location used for sidelink communication in a time length of a channel occupancy time COT of the network device.

According to this design, the terminal device may accurately determine each sidelink communication duration in the COT of the network device based on the configuration information of the sidelink communication duration.

In an implementation, when the channel access mode indicated by the first configuration information is the FBE mode, the second configuration information further includes a time length of a channel occupancy time COT in a fixed frame period FFP and a time length of an idle period (idle period) in the fixed frame period FFP.

According to this design, the terminal device may access a channel in the unlicensed frequency band in the FBE mode based on the foregoing parameters to perform sidelink communication.

In an implementation, when the channel access mode indicated by the first configuration information is the LBE mode, the second configuration information further includes a plurality of candidate transmission symbols in the sidelink communication duration, where any candidate transmission symbol is used by the terminal device to send sidelink data after listen before talk LBT succeeds.

According to this design, the terminal device has a plurality of sending opportunities in the sidelink communication duration. In this way, after LBT succeeds, the terminal device may start to send sidelink data from a latest candidate transmission symbol, and in sidelink communication duration, after the terminal device misses a candidate transmission symbol because LBT fails, there is another sending opportunity to send sidelink data after LBT succeeds. Therefore, according to this example, a channel access probability of the terminal device can be improved.

In a possible design, when the channel access mode indicated by the first configuration information is the LBE mode, the second configuration information further includes one transmission symbol in the sidelink communication duration, where the transmission symbol is used by the terminal device to send sidelink data after LBT succeeds.

According to this design, after LBT succeeds before the transmission symbol, the terminal device may start to send sidelink data at the transmission symbol. In addition, after LBT succeeds before the transmission symbol, another terminal device that receives the second configuration information may also start to send sidelink data at the transmission symbol. In this way, spatial reuse can be implemented when the terminal device in the communications system uses the LBE mode.

In a possible design, the terminal device may receive the second configuration information from the network device in the following manners:

Manner 1: The terminal device receives the second configuration information that is broadcast by the network device.

Manner 2: The terminal device receives the second configuration information sent by the network device to the terminal device.

According to this design, flexibility of sending the second configuration information by the network device can be improved.

In a possible design, the terminal device may obtain the second configuration information from system information that is broadcast by the network device, where the system information includes an MIB and/or RMSI.

In a possible design, the terminal device may obtain the second configuration information from downlink control information DCI that is broadcast by the network device, where the DCI is received through a GC-PDCCH.

In a possible design, the terminal device may obtain the second configuration information from RRC signaling received from the network device.

In a possible design, the terminal device may send a first configuration request to the network device, to request the first configuration information. For example, the terminal device may send the first configuration request to the network device when a sidelink communication service arrives. Alternatively, the terminal device may periodically send the first configuration request to the network device.

According to this design, this can avoid a problem that computing resources and sending resources on the network device side are wasted because the network device sends the first configuration information when a channel access mode does not need to be configured for the terminal device.

In a possible design, the terminal device may send a second configuration request to the network device, to request the second configuration information. Optionally, the second configuration request includes service requirement information of the terminal device. According to this design, the network device may dynamically adjust the second configuration information based on the service requirement information in the second configuration request to match a service requirement of the terminal device.

According to a third aspect, an embodiment of this application provides a communications apparatus, including units configured to perform the steps according to the first aspect or the second aspect.

According to a fourth aspect, an embodiment of this application provides a communications device, including at least one processing element and at least one storage element. The at least one storage element is configured to store a program and data, and the at least one processing element is configured to perform the method according to the first aspect or the second aspect of this application.

According to a fifth aspect, an embodiment of this application further provides a communications system, including a network device configured to perform the method according to the first aspect of this application and a terminal device configured to perform the method according to the second aspect of this application.

According to a sixth aspect, an embodiment of this application further provides a computer program. When the computer program is run on a computer, the computer is enabled to perform the method according to either of the foregoing aspects.

According to a seventh aspect, an embodiment of this application further provides a computer storage medium. The computer storage medium stores a computer program, and when the computer program is executed by a computer, the computer is enabled to perform the method according to either of the foregoing aspects.

According to an eighth aspect, an embodiment of this application further provides a chip. The chip is configured to read a computer program stored in a memory, to perform the method according to either of the foregoing aspects.

According to a ninth aspect, an embodiment of this application further provides a chip system. The chip system includes a processor, configured to support a computer apparatus in implementing the method according to either of the foregoing aspects. In a possible design, the chip system further includes a memory. The memory is configured to store a program and data that are necessary for the computer apparatus. The chip system may include a chip, or may include a chip and another discrete component.

## BRIEF DESCRIPTION OF DRAWINGS

FIG. 1A is a diagram of an architecture of a communications system according to an embodiment of this application;
FIG. 1B is a diagram of a network topology of a communications system according to an embodiment of this application;
FIG. 2 is a schematic diagram of an FBE mode according to an embodiment of this application;
FIG. 3 is a flowchart of a communication method according to an embodiment of this application;
FIG. 4A to FIG. 4F each are a diagram of an example of sidelink communication duration according to an embodiment of this application;
FIG. 5 is a diagram of an example of a candidate transmission symbol according to an embodiment of this application;
FIG. 6 is a diagram of an example of a transmission symbol according to an embodiment of this application;
FIG. 7A to FIG. 7I each are a schematic diagram of an example of a communication method according to an embodiment of this application;
FIG. 8 is a structural diagram of a communications apparatus according to an embodiment of this application;
FIG. 9 is a structural diagram of a communications device according to an embodiment of this application;
FIG. 10 is a structural diagram of a network device according to an embodiment of this application; and
FIG. 11 is a structural diagram of a terminal device according to an embodiment of this application.

## DESCRIPTION OF EMBODIMENTS

This application provides a communication method and a device, so that a terminal device in a communications system implements sidelink communication in an unlicensed frequency band. The method and the device are based on a same invention concept. Because problem-resolving principles of the method and the device are similar, mutual reference may be made to implementations of the device and the method. Repeated descriptions are not provided.

In the solution provided in the embodiments of this application, a network device in a communications system may send configuration information, to indicate a channel access mode used when a terminal device performs sidelink communication in an unlicensed frequency band. After receiving the configuration information, the terminal device that accesses the network device may perform sidelink communication in the unlicensed frequency band based on the channel access mode indicated by the configuration information. According to this solution, the terminal device in the communications system may implement sidelink communication in the unlicensed frequency band.

The following describes some terms in this application, to facilitate understanding for a person skilled in the art.

(1) Network device: The network device is a device that connects a terminal device to a wireless network in a communications system. As a node in a radio access network, the network device may also be referred to as a base station, or may be referred to as a radio access network (radio access network, RAN) node (or device).

Currently, for example, some network devices are a gNB, a transmission reception point (transmission reception point, TRP), an evolved NodeB (evolved NodeB, eNB), a radio network controller (radio network controller, RNC), a NodeB (NodeB, NB), an access point (access point, AP) base station controller (base station controller, BSC), a base transceiver station (base transceiver station, BTS), a home base station (for example, a home evolved NodeB or a home NodeB (HNB)), a baseband unit (baseband unit, BBU), and an enterprise LTE discrete spectrum aggregation (Enterprise LTE Discrete Spectrum Aggregation, eLTE-DSA) base station.

In addition, in a network structure, the network device may include a centralized unit (centralized unit, CU) node and a distributed unit (distributed unit, DU) node. In this structure, protocol layers of an eNB in a long term evolution (long term evolution, LTE) system are split, where functions of some protocol layers are centrally controlled by the CU, functions of some or all of remaining protocol layers are distributed in the DU, and the CU centrally controls the DU.

(2) Terminal device: The terminal device is a device that provides voice and/or data connectivity for a user.

The terminal device may also be referred to as user equipment (user equipment, UE), a mobile station (mobile station, MS), a mobile terminal (mobile terminal, MT), or the like.

For example, the terminal device may be a handheld device, a vehicle-mounted device, or a roadside unit that has a wireless connection function. Currently, for example, some terminal devices are a mobile phone (mobile phone), a tablet computer, a notebook computer, a palmtop computer, a mobile internet device (mobile internet device, MID), an intelligent point of sale (point of sale, POS), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a smart meter (a smart water meter, a smart electrical meter, or a smart gas meter), eLTE-DSA UE, a device having an integrated access and backhaul (integrated access and backhaul, IAB) capability, a vehicle-mounted electronic control unit (electronic control unit, ECU), a vehicle-mounted computer, an in-vehicle cruise system, and a telematics box (telematics box, T-Box).

(3) Bandwidth part (bandwidth part, BWP): The bandwidth part is a segment of consecutive frequency resources in a carrier used in a cell managed by a network device. For example, one BWP may include K consecutive subcarriers, include frequency resources on which M non-overlapping consecutive resource blocks (resource blocks, RBs) are located, or include frequency resources on which N non-overlapping consecutive resource block groups (resource block groups, RBGs) are located, where K, M, and N are all integers greater than 0. The BWP may also be referred to as a bandwidth resource, a bandwidth region, a frequency domain resource, a frequency resource part, or some frequency resources, or may have another name. This is not limited in this application.

(4) Term "and/or": The term "and/or" describes an association relationship between associated objects and indicates that three relationships may exist. For example, A and/or B may represent the following three cases: Only A exists, both A and B exist, and only B exists. The character "/" usually represents an "or" relationship between the associated objects.

It should be noted that "a plurality of' in this application means two or more. "At least one" means one or more.

In addition, it should be understood that in the descriptions of this application, terms such as "first" and "second" are merely used for distinguishing and description, but should not be understood as indicating or implying relative importance, or should not be understood as indicating or implying a sequence.

Before the embodiments of this application are described, a current usage of an unlicensed spectrum resource is first described.

Currently, an unlicensed spectrum resource has started to be used in many communications systems, for example, a wireless fidelity (wireless fidelity, Wi-Fi) system and a licensed assisted access (Licensed Assisted Access, LAA) system. Due to sharing of the unlicensed spectrum resource, a same resource is easily used by different communications devices at the same time. Therefore, a proper resource contention mechanism is required, to ensure that different communications devices (terminal devices or network devices) in a same unlicensed frequency band perform resource contention in a fair coexistence manner.

Currently, a commonly used listen before talk (listen before talk) mechanism requires that a communications device first listen on a channel and perform clear channel assessment (clear channel assessment, CCA) detection before sending data by using an unlicensed spectrum resource, so that signal transmission can be performed only when the channel is idle. A case in which the terminal device detects, through CCA detection, that a channel is idle may also mean that LBT succeeds, or a case in which the terminal device detects, through CCA detection, that a channel is busy may also mean that LBT fails.

The LBT mechanism mainly includes two channel access modes: a load based equipment (load based equipment, LBE) mode and a frame based equipment (frame based equipment, FBE) mode.

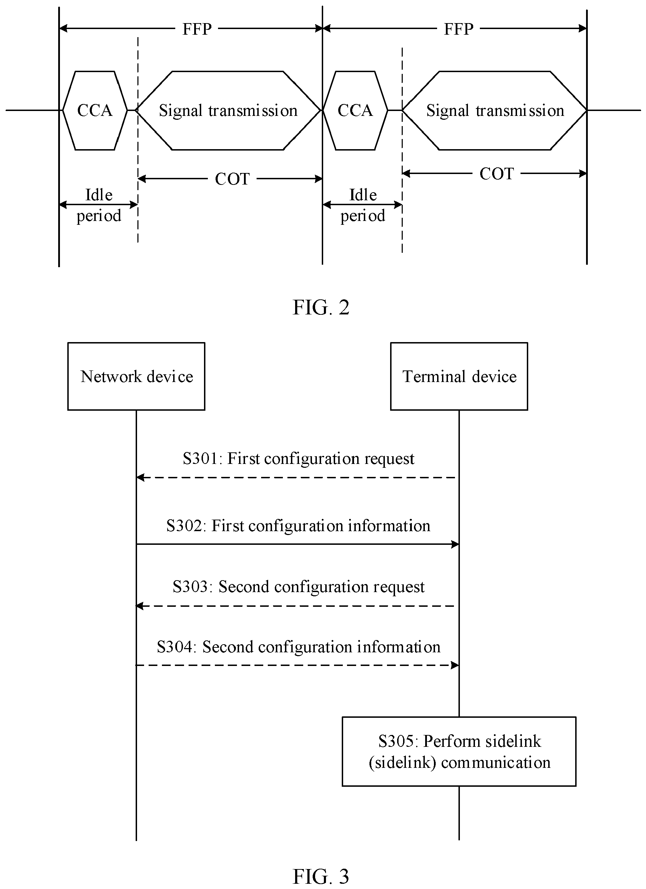

A main idea of the FBE mode is to send a signal in a manner of using a fixed frame format. Specifically, the communications system configures a fixed frame period (fixed frame period, FFP) for the communications device. A time length of the FFP is usually set between 1 millisecond (ms) and 10 ms, and the time length of the FFP cannot be changed within 200 ms. As shown in FIG. 2, each FFP includes a channel occupancy time (channel occupancy time, COT) and an idle period (idle period). When the communications device needs to send sidelink data, the communications device performs CCA detection in an idle period in an adjacent FFP. If the communications device detects that a channel is idle, the communications device may send a signal in a COT in the FFP. If the communications device detects that a channel is busy, the communications device continues performing CCA detection in an idle period in a next FFP.

It should be noted that spatial reuse (spatial reuse) may be implemented in the FBE mode. To be specific, a plurality of communications devices may synchronously complete CCA detection in an idle period in an FFP, and after detecting, through CCA detection, that a channel is idle, the plurality of communications devices may synchronously send signals in a COT in the current FFP. Because the FBE mode supports spatial reuse, using the FBE mode in the communications system can increase a capacity of the communications system and a data transmission rate, and improve time-frequency resource utilization.

A main idea of the LBE mode is as follows: Before the communications device needs to send data, the communications device needs to perform a random backoff process. The random backoff process is as follows: The communications device generates a random contention window (contention window, CW) (that is, a time length of n consecutive times of backoff), and initializes a backoff count counter to n. The communications device performs CCA detection in a contention window, and decreases the backoff count counter by 1 each time detecting that a channel in a slot is idle. If the communications device continuously detects, in the contention window, that the channel is idle, the communications device may occupy the channel to send a signal. If the communications device detects, in the contention window, that the channel is busy, the communications device stops counting of the backoff count counter, and starts, after the channel is idle, counting of the backoff count counter to continue backoff until the count of the backoff count counter is 0. Therefore, random backoff is completed. It should be noted that contention windows in which different communications devices perform CCA detection may be different, and contention windows generated by a same communications device for different times may also be different. It should be noted that the current LBE mode does not support spatial reuse of the communications device.

It can be learned from the foregoing descriptions that the communications device needs to perform CCA detection regardless of which mode is used. When performing CCA detection, the communications device may use a signal energy-based detection method and/or a signal type-based detection method. In the signal energy-based detection method, the communications device determines a status of a channel by using a specified energy detection threshold (energy detection threshold). When detecting that signal energy on the channel exceeds the energy detection threshold, the communications device determines that the channel is busy. When detecting that signal energy on the channel is less than the energy detection threshold, the communications device determines that the channel is idle.

It should be understood that energy detection thresholds of different communications devices may be different, and a value of an energy detection threshold of each communications device is related to transmit power of the communications device. Optionally, a correspondence between the value of the energy detection threshold and the transmit power is as follows:

$$TL = -75 \text{ dBm/megahertz (MHz) when } PH \leq 13 \text{ decibel-milliwatt (dBm)}$$

$$TL = -85 \text{ dBm/MHz} + (23 \text{ dBm} - PH) \text{ when } 13 \text{ dBm} < PH < 23 \text{ dBm}$$

$$TL = -85 \text{ dBm/MHz when } PH \geq 23 \text{ dBm}$$

In the foregoing correspondence, PH is the transmit power, and TL is the energy detection threshold.

Based on the foregoing correspondence, when the transmit power of the communications device is 13 dBm in a bandwidth of 20 MHz, the energy detection threshold of the communications device is -64 dBm/MHz.

The two channel access modes in the LBT mechanism are briefly described above. In addition, the communications device may further implement signal transmission in the unlicensed frequency band based on another channel access mode, for example, an ultra-long-haul low-power data transmission mode or an ultra narrowband (ultra narrowband, UNB) mode.

In the ultra-long-haul low-power data transmission mode, also referred to as a LoRa mode, the communications device determines a status of a channel based on whether a response is received on the channel.

In the UNB mode, the communications device repeatedly transmits a signal for three times to improve a signal sending success rate. To be specific, the terminal randomly selects three subchannels in a preset unlicensed frequency band, and performs blind sending for three times. Then, the communications device scans the unlicensed frequency band to receive downlink data. If the communications device receives the downlink data, the communications device performs processing. If the communications device does not receive the downlink data, the communications device enters a sleep state after setting a time length.

The following describes the embodiments of this application in detail with reference to the accompanying drawings.

FIG. 1A shows a possible architecture of a communications system to which a communication method is applicable according to an embodiment of this application. Refer to FIG. 1A. The communications system includes a network device and terminal devices (a terminal device a to a terminal device e in FIG. 1A).

The network device is an entity that can receive and transmit a wireless signal on a network side, and is responsible for providing a radio access-related service for a terminal device in a cell managed by the network device, and implementing a physical layer function, resource scheduling and radio resource management, quality of service (Quality of Service, QoS) management, radio access control, and mobility management.

The terminal device is an entity that can receive and transmit a wireless signal on a user side, and needs to access a network by using the network device.

The communications system shown in FIG. 1A supports a sidelink communications technology. The sidelink communications technology is a near field communications technology in which terminal devices can be directly connected to each other, and is also referred to as a proximity service (proximity service, ProSe) communications technology or a D2D communications technology. In the communications system, a plurality of terminal devices that are located at relatively close geographical locations and support sidelink communication may form a communications subsystem. In the communications subsystem, sidelink communication can be performed between the terminal devices.

For example, in the communications system shown in FIG. 1A, the terminal device a, the terminal device b, and the terminal device c all support sidelink communication. In this case, the three terminal devices may form a communications subsystem, and sidelink data can be transmitted between the terminal device a and the terminal device b and between the terminal device b and the terminal device c.

Based on the architecture of the communications system shown in FIG. 1A, as shown in FIG. 1B, an embodiment of this application further provides a network topology architecture of a communications system. A network device and a terminal device may be connected through an air interface (namely, a Uu interface), to implement communication (such communication may be briefly referred to as Uu communication or cellular network communication) between the terminal device and the network device. A direct link may be established between adjacent terminal devices through a PC5 interface to transmit sidelink data.

An unlicensed spectrum resource may be used for data transmission in the communications systems shown in FIG. 1A and FIG. 1B, to increase a capacity of the communications system and reduce pressure of a shortage of a licensed spectrum resource.

In an implementation, in the communications system, the network device or a core network device may set the terminal device to perform sidelink communication in a specified unlicensed frequency band. The specified unlicensed frequency band may be all or some unlicensed frequency bands in a system bandwidth.

In another implementation, a BWP is introduced into the communications system, and the network device may divide a specified unlicensed frequency band into a plurality of BWPs. After the terminal device accesses the network device, the network device may select at least one BWP for the terminal device to perform sidelink communication, so that the terminal device can transmit sidelink data based on a frequency domain resource in the at least one BWP. For example, the network device may divide all unlicensed frequency bands in a system bandwidth into a plurality of BWPs. For another example, the network device may specify that a portion of unlicensed frequency bands in a system bandwidth are divided into a plurality of BWPs, and another portion of the unlicensed frequency bands in the system bandwidth are not divided. In addition, a frequency domain range of each BWP obtained by the network device through division and a quantity of BWPs obtained through division may be set based on a specific application scenario.

Currently, sidelink communication supports only a licensed spectrum resource. Therefore, how to implement sidelink communication in an unlicensed frequency band in the communications systems shown in FIG. 1A and FIG. 1B is a problem that needs to be urgently resolved in this field.

It should be further noted that the communications systems shown in FIG. 1A and FIG. 1B are used as an example, and constitute no limitation on a communications system to which the method provided in the embodiments of this application is applicable. The embodiments of this application may be further applied to various types and standards of communications systems, for example, a 5th generation (5th Generation, 5G) communications system, a long term evolution (Long Term Evolution, LTE) communications system, a vehicle-to-everything (vehicle-to-everything, V2X) system, a long term evolution-vehicle (LTE-vehicle, LTE-V) system, a vehicle-to-vehicle (vehicle-to-vehicle, V2V) system, an internet of vehicles system, a machine type communications (Machine Type Communications, MTC) system, an internet of things (internet of things, IoT) system, a long term evolution for machine-to-machine (LTE for machine-to-machine, LTE-M) system, a machine-to-machine (machine-to-machine, M2M) system, and an enterprise LTE discrete spectrum aggregation (enterprise LTE discrete spectrum aggregation, eLTE-DSA) system. This is not limited in the embodiments of this application.

An embodiment of this application provides a communication method, so that a terminal device performs sidelink communication in an unlicensed frequency band. The method may be applied to the communications systems shown in FIG. 1A and FIG. IB. A system bandwidth in the communications system includes an unlicensed frequency band, and in this case, a network device can use and schedule a spectrum resource in the unlicensed frequency band. For a procedure of the method, refer to FIG. 3. S301, S303, and S304 are optional.

As shown in FIG. 3, the procedure of the method includes the following steps.

S302: The network device sends first configuration information, where the first configuration information indicates a channel access mode used when a terminal device that accesses the network device performs sidelink communication in an unlicensed frequency band.

Optionally, the channel access mode indicated by the first configuration information may be an LBE mode, an FBE mode, a LoRa mode, or a UNB mode. This is not limited in this embodiment of this application.

In addition, the first configuration information may further include a sidelink transmission indication, to notify the terminal device accessing the network device that sidelink transmission is supported in a cell managed by the network device.

It should be noted that before S302, the network device may actively determine and send the first configuration information based on an actual application scenario. Alternatively, after S301, the network device may determine the first configuration information based on a request of the terminal device that accesses the network device.

S301: The terminal device that accesses the network device sends a first configuration request to the network device.

The terminal device needs to support sidelink communication.

Optionally, the terminal device may send the first configuration request to the network device when a sidelink communication service arrives. Alternatively, the terminal device may periodically send the first configuration request to the network device.

The network device may send the first configuration information in the following two implementations.

Implementation 1: The network device broadcasts the first configuration information.

Example 1: The network device broadcasts system information, where the system information includes the first configuration information, and the system information includes a master information block (master information block, MIB) and/or remaining minimum system information (remaining minimum system information, RMSI).

Because the first configuration information is used to indicate the channel access mode, a data amount is relatively small, and the first configuration information may be usually carried in the any system information to be successfully sent.

Example 2: The network device broadcasts downlink control information (downlink control information, DCI), where the DCI includes the first configuration information, and the DCI is sent through a group common physical downlink control channel (group common physical downlink control channel, GC-PDCCH). For example, the network device may use a slot format indication (Slot format indication, SFI) on the GC-PDCCH to carry the first configuration information.

Implementation 2: The network device sends the first configuration information to the terminal device.

Example 1: The network device sends radio resource control (radio resource control, RRC) signaling to the terminal device, where the RRC signaling includes the first configuration information.

Based on the foregoing steps, the network device in the communications system may configure a channel access mode used when the accessed terminal device performs sidelink communication, so that the terminal device can access, based on the channel access mode configured by the network device, a channel in the unlicensed frequency band to perform sidelink communication.

It should be further noted that in the communications system, the network device may perform S302 for a plurality of times, and channel access modes indicated by the first configuration information may be different each time S302 is performed. Therefore, according to this embodiment of this application, the communications system may simultaneously support a plurality of channel access modes, so that the channel access mode is more flexibly configured for the terminal device in the communications system.

Optionally, the method provided in this embodiment of this application further includes S303 and S304, to implement a channel access configuration used when the terminal device performs sidelink communication.

S304: The network device sends second configuration information, where the second configuration information is used to indicate a channel access configuration used when the terminal device performs sidelink communication.

The second configuration information may include different specific content based on different scenarios.

Scenario 1: The communications system does not divide the unlicensed frequency band into a plurality of BWPs, or the communications system divides the unlicensed frequency band into a plurality of BWPs, but the network device has selected a BWP for sidelink communication.

The second configuration information may include at least one or a combination of the following: configuration information of sidelink communication duration (sidelink communication duration), maximum transmit power, and indication information of a frequency domain resource used for sidelink communication.

Optionally, the BWP selected by the network device for sidelink communication may be notified to the terminal device in another manner. For example, the network device may further notify, by using RRC signaling or DCI, the terminal device of the BWP used for sidelink communication.

Scenario 2: The communications system has divided the unlicensed frequency band into a plurality of BWPs, and the network device selects at least one BWP from the plurality of BWPs for sidelink communication.

The second configuration information includes indication information of at least one BWP used for sidelink communication and at least one or a combination of the following corresponding to each BWP: configuration information of sidelink communication duration, maximum transmit power, and indication information of a frequency domain resource used for sidelink communication in the BWP, where the indication information of the BWP may be an index ID of the BWP.

In the foregoing two scenarios, the sidelink communication duration is a specified time period in which the terminal device performs sidelink communication. The maximum transmit power is maximum allowable transmit power that is of the terminal device and that exists when the terminal device sends sidelink data. The frequency domain resource is in the unlicensed frequency band, and the indication information of the frequency domain resource may be a start location of the frequency domain resource and a width of the frequency domain resource, for example, a start physical resource block (physical resource block, PRB) index (index) and a quantity of PRBs. The indication information of the frequency domain resource may alternatively be a start location and an end location of the frequency domain resource, for example, a start PRB index and an end PRB index.

Because an energy detection threshold of the terminal device is related to transmit power of the terminal device, the network device may use the second configuration information to carry the maximum transmit power, to control the energy detection threshold of the terminal device. For example, the network device may reduce the maximum transmit power of the terminal device, to correspondingly increase the energy detection threshold of the terminal device, so as to increase a probability that the terminal device detects that a channel is idle, and finally increase a probability that the terminal device accesses the channel.

In a first possible design, the configuration information of the sidelink communication duration may include the following information: a time length of the sidelink communication duration, period information of the sidelink communication duration, and a time offset of first sidelink communication duration relative to a radio frame boundary.

Optionally, the period information of the sidelink communication duration may be a time length of a period of the sidelink communication duration or a time interval between two adjacent sidelink communication durations. A value of the period of the sidelink communication duration is a time length between start points (or end points) of two adjacent sidelink communication durations. The time interval between the two adjacent sidelink communication durations is a time length between an end point of current sidelink communication duration and a start point of next sidelink communication duration.

It should be further noted that different BWPs may correspond to same or different configuration information of sidelink communication duration.

The following describes examples of the sidelink communication duration and the configuration information of the sidelink communication duration for different scenarios with reference to the accompanying drawings.

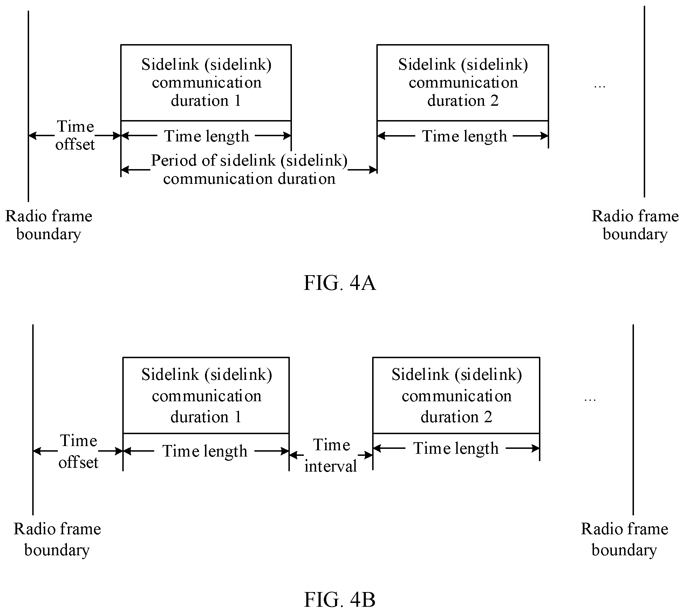

Example 1: In Scenario 1, the configuration information of the sidelink communication duration includes a time length of the sidelink communication duration, a time length of a period of the sidelink communication duration, and a time offset of first sidelink communication duration relative to a radio frame boundary. Specifically, for the sidelink communication duration and the configuration information of the sidelink communication duration, refer to FIG. 4A.

Example 2: In Scenario 1, the configuration information of the sidelink communication duration includes a time length of the sidelink communication duration, a time interval between two adjacent sidelink communication durations, and a time offset of first sidelink communication duration relative to a radio frame boundary. Specifically, for the sidelink communication duration and the configuration information of the sidelink communication duration, refer to FIG. 4B.

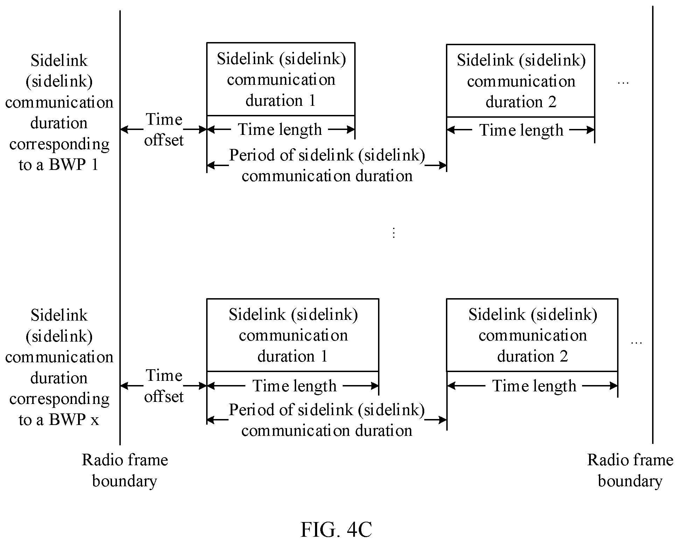

Example 3: In Scenario 2, when there are a plurality of BWPs used for sidelink communication, configuration information of sidelink communication duration corresponding to each BWP includes a time length of the sidelink communication duration, a time length of a period of the sidelink communication duration, and a time offset of first sidelink communication duration relative to a radio frame boundary. Specifically, for the sidelink communication duration and the configuration information of the sidelink communication duration, refer to FIG. 4C.

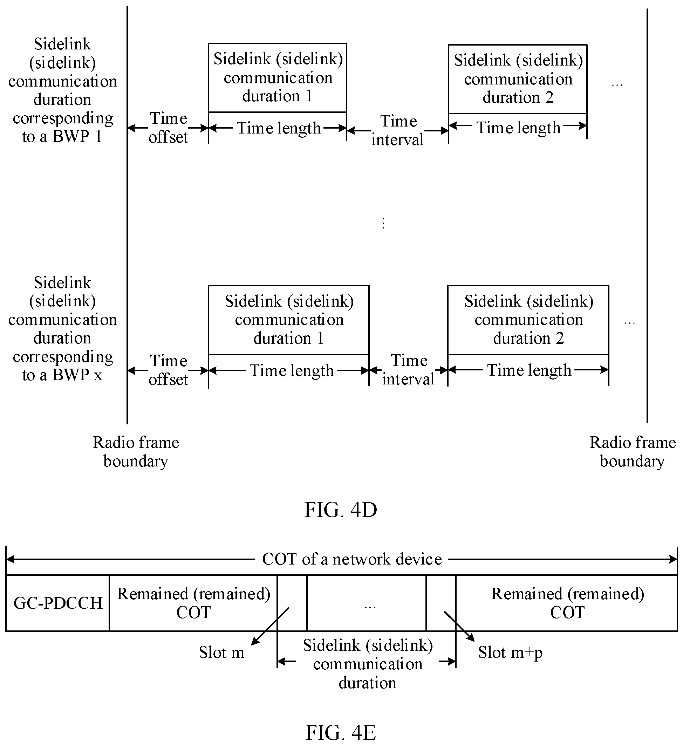

Example 4: In Scenario 2, when there are a plurality of BWPs used for sidelink communication, configuration information of sidelink communication duration corresponding to each BWP includes a time length of the sidelink communication duration, a time interval between two adjacent sidelink communication durations, and a time offset of first sidelink communication duration relative to a radio frame boundary. Specifically, for the sidelink communication duration and the configuration information of the sidelink communication duration, refer to FIG. 4D.

In the foregoing first possible design, the time length of the sidelink communication duration may be expressed in a quantity of slots, in other words, the time length of the sidelink communication duration is the quantity of slots. Alternatively, the time length of the sidelink communication duration is an absolute time value. This is not limited in this application.

In a second possible design, the configuration information of the sidelink communication duration includes a slot location used for sidelink communication in a time length of a COT of the network device. The COT of the network device is used by the network device to perform Uu communication shown in FIG. IB.

In this design, there may be one or more sidelink communication durations. In addition, when there are a plurality of sidelink communication durations, different sidelink communication durations may occupy same or different quantities of slots.

It should be noted that configuration information of any sidelink communication duration includes indexes (indexes) of all slots occupied by the sidelink communication duration, an index of a first slot occupied by the sidelink communication duration and an index of a last slot occupied by the sidelink communication duration, or an index of a first slot occupied by the sidelink communication duration and a quantity of slots occupied by the sidelink communication duration. This is not limited in this application.

Example 1: When there is one sidelink communication duration, for the sidelink communication duration and configuration information of the sidelink communication duration, reference may be made to FIG. 4E. The configuration information of the sidelink communication duration may include a slot m, a slot m+1, ..., and a slot m+p, include a slot m and a quantity p of slots, or include a slot m and a slot m+p.

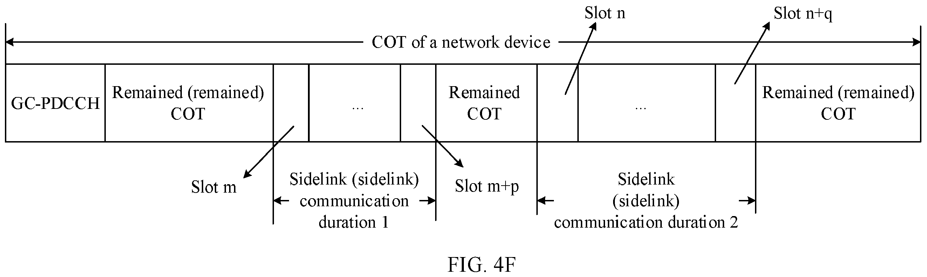

Example 2: When there are two sidelink communication durations, for the sidelink communication duration and configuration information of the sidelink communication duration, reference may be made to FIG. 4F. Configuration information of sidelink communication duration 1 may include a slot m, a slot m+1, ..., and a slot m+p, include a slot m and a quantity p of slots, or include a slot m and a slot m+p. Configuration information of sidelink communication duration 2 may include a slot n, a slot n+1, ..., and a slot n+q, include a slot n and a quantity q of slots, or include a slot n and a slot n+q.

In FIG. 4E and FIG. 4F, a remained (remained) COT is used by the network device to perform Uu communication.

Optionally, the network device may use each sidelink communication duration as a paused (paused) COT, that is, the network device does not perform an operation in the paused COT. In this way, the sidelink communication duration does not occupy a time in which the network device performs Uu communication in the COT of the network device, to ensure that the network device has sufficient time to send data.

Optionally, the network device may alternatively perform Uu communication in the sidelink communication duration.

In addition, based on the channel access mode indicated by the first configuration information, the second configuration information further includes a specific parameter corresponding to the channel access mode.

In a first example, when the channel access mode indicated by the first configuration information is the FBE mode, the second configuration information further includes a time length of a COT in an FFP and a time length of an idle period in the FFP. The COT and the idle period may be expressed in a quantity of slots, or may be an absolute time value. This is not limited in this application.

In a second example, when the channel access mode indicated by the first configuration information is the LBE mode, the second configuration information further includes a plurality of candidate transmission symbols in the sidelink communication duration.

Any candidate transmission symbol is used by the terminal device as a start symbol for sending sidelink data after LBT succeeds. In other words, after LBT succeeds, the terminal device may select one of the plurality of candidate transmission symbols as the start symbol for sending the sidelink data. It should be noted that in this embodiment of this application, the sidelink data may include control information and service data information in sidelink communication.

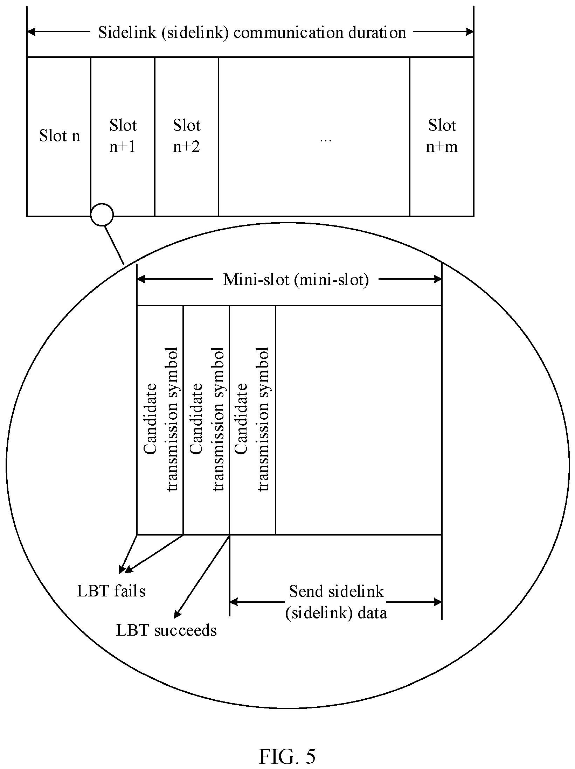

Refer to FIG. 5. The network device sets a plurality of candidate transmission symbols in each sidelink communication duration, to enable the terminal device to have a plurality of sending opportunities in the sidelink communication duration. In the sidelink communication duration, after LBT succeeds, the terminal device may start to send sidelink data from a latest candidate transmission symbol. In this way, in sidelink communication duration, after the terminal device misses a candidate transmission symbol because LBT fails, there is another sending opportunity to send sidelink data after LBT succeeds. Therefore, in this example, a channel access probability of the terminal device in the communications system can be improved.

In a third example, when the channel access mode indicated by the first configuration information is the LBE mode, the second configuration information further includes one transmission symbol in the sidelink communication duration.

The sending symbol is used by the plurality of terminal devices to synchronously send sidelink data after LBT succeeds. Optionally, the transmission symbol may be a symbol in the sidelink communication duration.

It can be learned from the descriptions of the LBE mode in this embodiment that the current LBE mode does not support spatial reuse of the terminal device. However, in this example, all terminal devices that successfully perform LBT before the transmission symbol may synchronously start to send sidelink data at the transmission symbol. In this way, spatial reuse can be implemented when the terminal device uses the LBE mode.

In addition, because the terminal device that uses the LBE mode maintains a contention window, different terminal devices have different sizes of contention windows. In this embodiment of this application, all terminal devices that receive the second configuration information may adjust corresponding LBT start moments based on sizes of current respective contention windows, to ensure that the terminal device successfully performs LBT before the transmission symbol as much as possible, so that the plurality of terminal devices synchronously send the sidelink data at the transmission symbol.

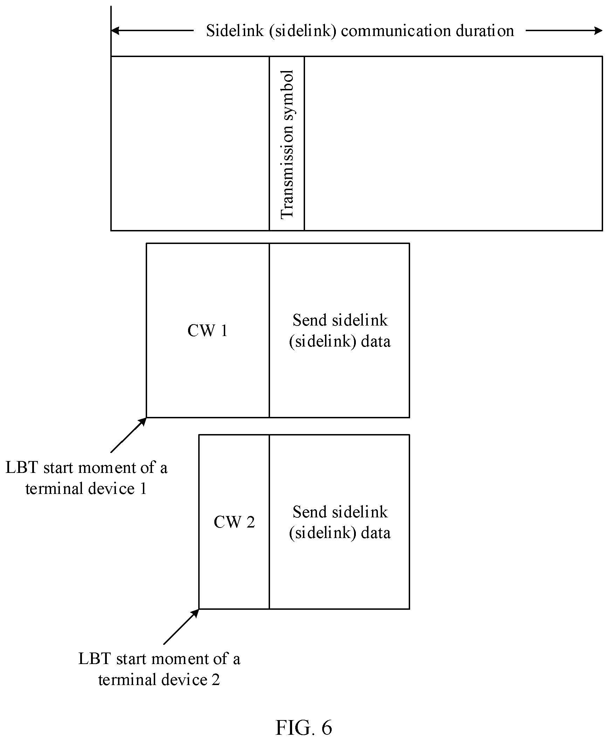

FIG. 6 is used as an example below for description. FIG. 6 shows a time location of a transmission symbol in sidelink communication duration configured in second configuration information. Currently, a time length of a contention window of a terminal device 1 is a CW 1, and a time length of a contention window of a terminal device 2 is a CW 2. After receiving the second configuration information, the terminal device 1 determines the time location of the transmission symbol in the sidelink communication duration, and determines a latest LBT start moment, that is, an LBT start moment of the terminal device 1 in the figure, based on the time location of the transmission symbol and the time length CW 1 of the contention window of the terminal device 1. Similarly, after receiving the second configuration information, the terminal device 2 determines a latest LBT start moment, that is, an LBT start moment of the terminal device 2 in the figure, based on the location of the transmission symbol and the time length CW 2 of the contention window of the terminal device 2. In this way, after LBT succeeds, the terminal device 1 and the terminal device 2 may synchronously start to send sidelink data from the transmission symbol.

A target device to which the terminal device 1 sends sidelink data may be the terminal device 2 or another terminal device. A target device to which the terminal device 2 sends sidelink data may be the terminal device 1 or another terminal device. To be specific, the terminal device 1 and the terminal device 2 may start to send sidelink data to each other at the transmission symbol. Alternatively, the terminal device 1 and the terminal device 2 simultaneously send sidelink data to a terminal device 3 at the transmission symbol. Alternatively, the terminal device 1 sends sidelink data to a terminal device 3 at the transmission symbol, and the terminal device 2 sends sidelink data to a terminal device 4 at the transmission symbol.

Similar to S302, optionally, the network device may send the second configuration information in the following two implementations.

Implementation 1: The network device sends the second configuration information through broadcast.

Example 1: The network device broadcasts system information, where the system information includes the second configuration information, and the system information includes an MIB and/or RMSI.

Example 2: The network device broadcasts DCI, where the DCI includes the second configuration information, and the DCI is sent through a GC-PDCCH. For example, the network device may use an SFI on the GC-PDCCH to carry the second configuration information.

It should be noted that when the network device sends the second configuration information in the manner in Example 2, for example, as shown in FIG. 4E and FIG. 4F, the sidelink communication duration configured in the second configuration information may be in a COT of the network device.

Implementation 2: The network device sends the second configuration information to the terminal device.

Example 1: The network device sends RRC signaling to the terminal device, where the RRC signaling includes the second configuration information.

In this embodiment of this application, when the network device sends the first configuration information and the second configuration information, the network device may simultaneously send the first configuration information and the second configuration information. For example, both the first configuration information and the second configuration information are carried in the MIB the RMSI, the DCI, or the RRC signaling.

Alternatively, the network device may first send the first configuration information and then send the second configuration information. For example, the first configuration information is carried in the MIB, and the second configuration information is carried in the RMSI, the RRC signaling, or the DCI. For another example, the first configuration information is carried in the RMSI, and the second configuration information is carried in the RRC signaling or the DCI.

In S304, the network device in the communications system may configure channel access information (content such as a time-frequency resource or power used for channel access, or a parameter that corresponds to the channel access mode and that is used for channel access) used when the accessed terminal device performs sidelink communication, so that the terminal device can access, based on the channel access information configured by the network device, a channel in the unlicensed frequency band to perform sidelink communication.

It should be noted that before S304, the network device may actively determine and send the second configuration information based on an actual application scenario. Alternatively, the network device determines the second configuration information when determining the first configuration information. Alternatively, after S303, the network device determines the second configuration information based on a request of the terminal device that accesses the network device.

S303: The terminal device that accesses the network device sends a second configuration request to the network device.

Optionally, the terminal device sends the second configuration request when a sidelink communication service arrives or after receiving the first configuration information. The second configuration request may carry service requirement information of the sidelink communication service of the terminal device. In this way, the network device may dynamically adjust the second configuration information based on the service requirement information in the second configuration request to match a service requirement of the terminal device.

For example, if the service requirement information that the terminal device uses the second configuration request to carry is information such as an amount of sidelink data or communication duration, the network device may determine a time length of the sidelink communication duration based on the foregoing information.

In this embodiment of this application, the terminal device that accesses the network device may further simultaneously send the first configuration request and the second configuration request to the network device.

S305: After receiving the first configuration information from the network device, the terminal device that accesses the network device performs sidelink communication in the unlicensed frequency band based on the channel access mode indicated by the first configuration information.

In addition, when the terminal device further receives the second configuration information from the network device, the terminal device performs sidelink communication in the unlicensed frequency band based on the channel access mode indicated by the first configuration information and the channel access configuration indicated by the second configuration information.

Optionally, when the second configuration information includes the configuration information of the sidelink communication duration, the terminal device performs sidelink communication in the sidelink communication duration based on the channel access mode indicated by the first configuration information.

Optionally, when the second configuration information includes the maximum transmit power, the terminal device performs sidelink communication based on the channel access mode indicated by the first configuration information, and the maximum transmit power is not exceeded when the terminal device sends sidelink data.

Optionally, when the second configuration information includes the indication information of the frequency domain resource used for sidelink communication, the terminal device performs, by using the frequency domain resource, sidelink communication based on the channel access mode indicated by the first configuration information.

Optionally, when the second configuration information includes indication information of a plurality of BWPs, and the terminal device performs sidelink communication in any one of the BWPs, the terminal device may perform sidelink communication based on the channel access mode indicated by the first configuration information and a channel access configuration corresponding to the BWP.

An embodiment of this application provides a communication method. In the method, a network device may configure a channel access mode used when an accessed terminal device performs sidelink communication, so that the terminal device can access, based on the channel access mode configured by the network device, a channel in an unlicensed frequency band to perform sidelink communication. The network device may further configure channel access information (content such as a time-frequency resource or power used for channel access, or a parameter that corresponds to the channel access mode and that is used for channel access) to be used for sidelink communication, so that the terminal device can perform sidelink communication based on the channel access information configured by the network device.

According to the foregoing embodiments, an embodiment of this application further provides an example of a communication method. This example is applicable to the communications systems shown in FIG. 1A and FIG. IB. A system bandwidth in the communications system includes an unlicensed frequency band, and in this case, a network device can use and schedule a spectrum resource in the unlicensed frequency band.

In this example, the network device may use an MIB or RMSI to carry first configuration information, where the first configuration information indicates a channel access mode used when a terminal device that accesses the network device performs sidelink communication in the unlicensed frequency band.

The network device may use RMSI or RRC signaling to carry second configuration information, where the second configuration information includes indication information of a plurality of BWPs that support sidelink communication, configuration information of sidelink communication duration corresponding to each BWP, maximum transmit power, and indication information of a frequency domain resource used for sidelink communication in the BWP.

The configuration information of the sidelink communication duration includes a time length of the sidelink communication duration, period information of the sidelink communication duration, and a time offset of first sidelink communication duration relative to a radio frame boundary.

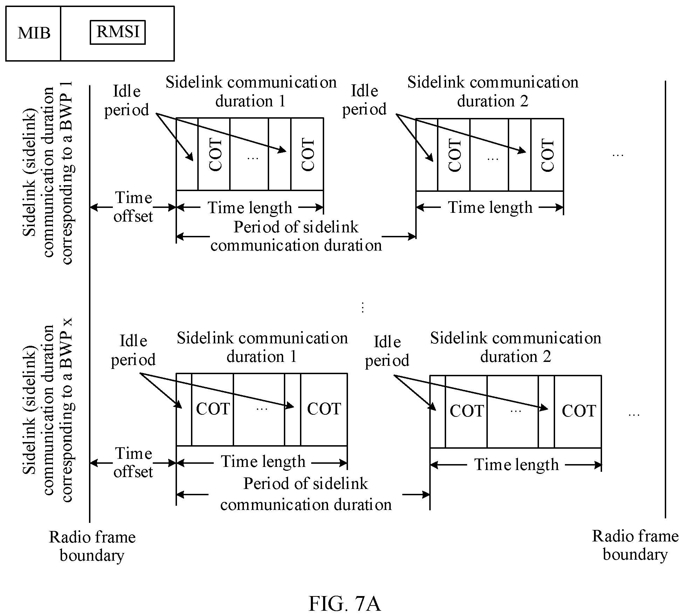

When the channel access mode indicated by the first configuration information is an FBE mode, for example, as shown in FIG. 7A, the second configuration information further includes a time length of a COT in an FFP and a time length of an idle period in the FFP.

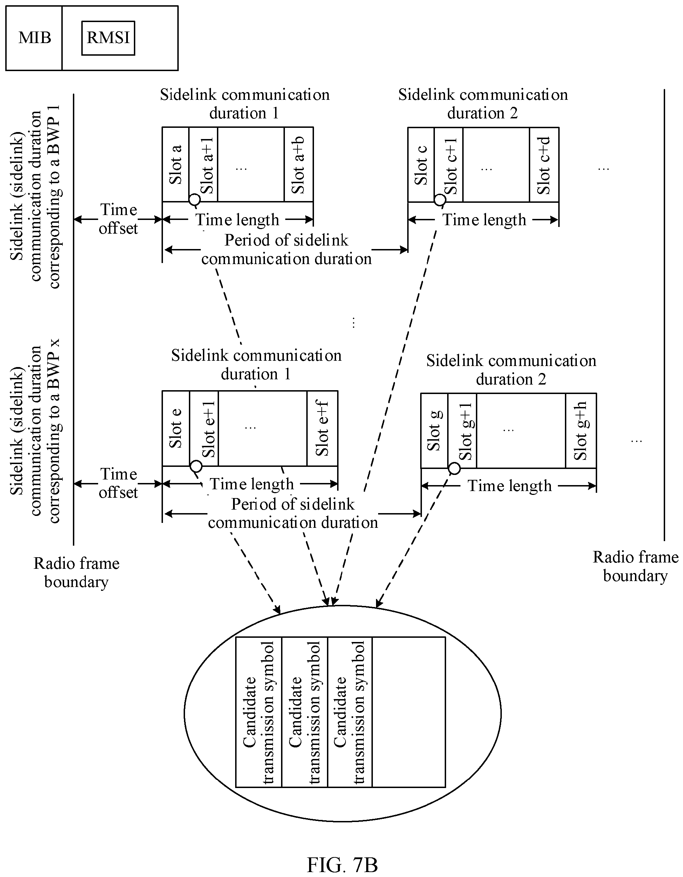

When the channel access mode indicated by the first configuration information is an LBE mode, for example, as shown in FIG. 7B, the second configuration information further includes a plurality of candidate transmission symbols in the sidelink communication duration.

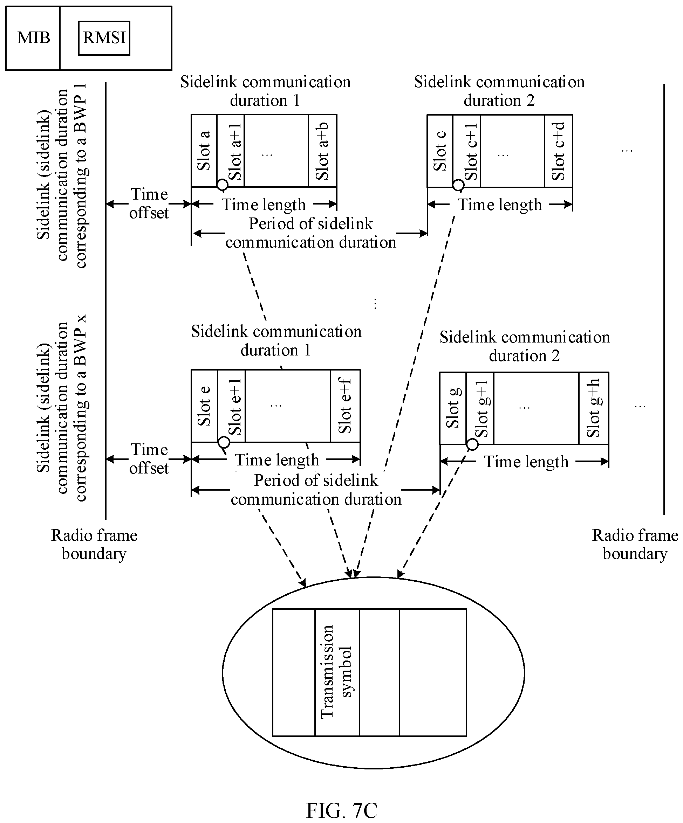

When the channel access mode indicated by the first configuration information is an LBE mode, for example, as shown in FIG. 7C, the second configuration information further includes one transmission symbol in the sidelink communication duration.

It should be noted that there may be one or more sidelink communication durations corresponding to each BWP, and different BWPs may correspond to same or different quantities of sidelink communication durations. In addition, communication durations may have same or different time lengths. In FIG. 7A to FIG. 7C, for example, each BWP corresponds to a plurality of sidelink communication durations. When each BWP corresponds to one sidelink communication duration, reference may be made to one of the sidelink communication durations corresponding to each BWP in FIG. 7A to FIG. 7C.

After receiving the first configuration information and the second configuration information, the terminal device performs sidelink communication based on the first configuration information and the second configuration information. For details, refer to the descriptions in the foregoing embodiments. The details are not described herein again.

**EP 3 952 355 A1**

In another embodiment, the network device may further dynamically notify the terminal device by using DCI in the following example. This example is also applicable to the communications systems shown in FIG. 1A and FIG. IB. A system bandwidth in the communications system includes an unlicensed frequency band, and in this case, a network device can use and schedule a spectrum resource in the unlicensed frequency band.

In this example, the network device uses an SFI on a GC-PDCCH to carry first configuration information and second configuration information. The first configuration information indicates a channel access mode used when a terminal device that accesses the network device performs sidelink communication in an unlicensed frequency band. The second configuration information includes configuration information of sidelink communication duration, maximum transmit power, and indication information of a frequency domain resource used for sidelink communication in a BWP.

The configuration information of the sidelink communication duration includes a slot location used for sidelink communication in a time length of a COT of the network device.

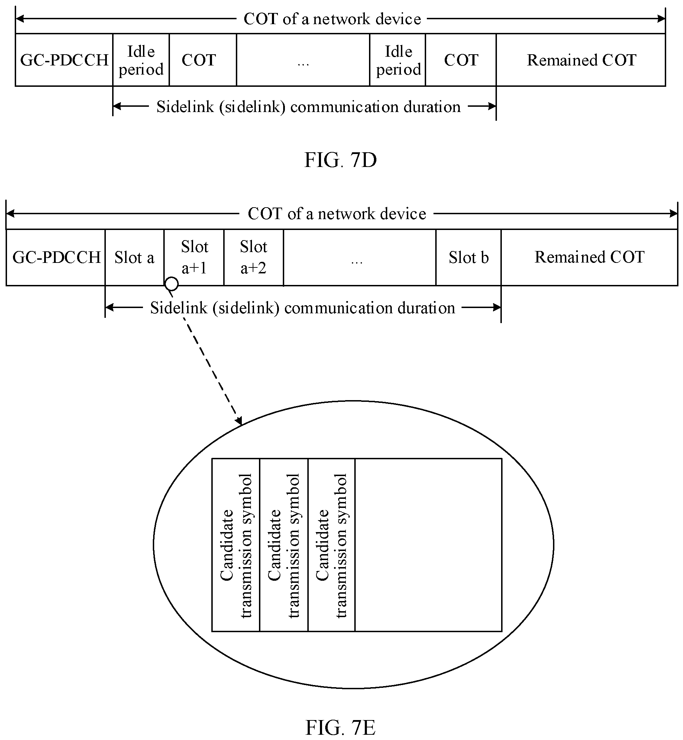

When the channel access mode indicated by the first configuration information is an FBE mode, for example, as shown in FIG. 7D, the second configuration information further includes a time length of a COT in an FFP and a time length of an idle period in the FFP.

When the channel access mode indicated by the first configuration information is an LBE mode, for example, as shown in FIG. 7E, the second configuration information further includes a plurality of candidate transmission symbols in the sidelink communication duration.

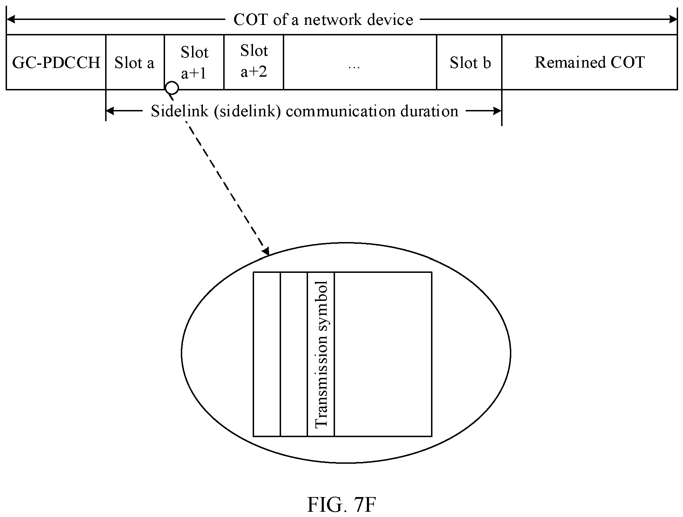

When the channel access mode indicated by the first configuration information is an LBE mode, for example, as shown in FIG. 7F, the second configuration information further includes one transmission symbol in the sidelink communication duration.

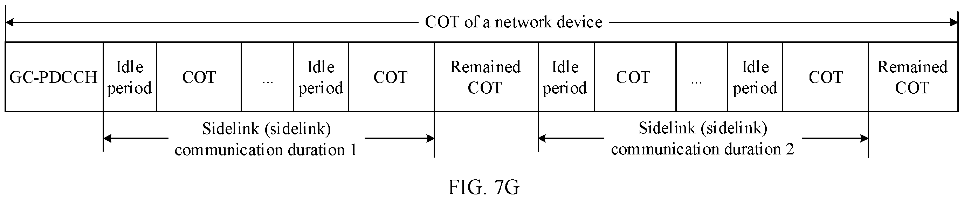

In FIG. 7D to FIG. 7F, for example, one sidelink communication duration is configured in the second configuration information. When a plurality of sidelink communication durations are configured in the second configuration information, reference may be made to FIG. 7G to FIG. 7I. Different sidelink communication durations may have same or different time lengths (that is, have same or different quantities of slots occupied by the different sidelink communication durations). In FIG. 7G to FIG. 7I, only an example in which the different sidelink communication durations have a same time length is used for description.

When the channel access mode indicated by the first configuration information is an FBE mode, and two sidelink communication durations are configured in the second configuration information, the second configuration information further includes a time length of a COT in an FFP and a time length of an idle period in the FFP. It should be noted that the network device may set same or different time lengths of COTs and time lengths of idle periods for different sidelink communication durations. For example, as shown in FIG. 7G, sidelink communication duration 1 and sidelink communication duration 2 have a same time length of COTs and a same time length of idle periods.

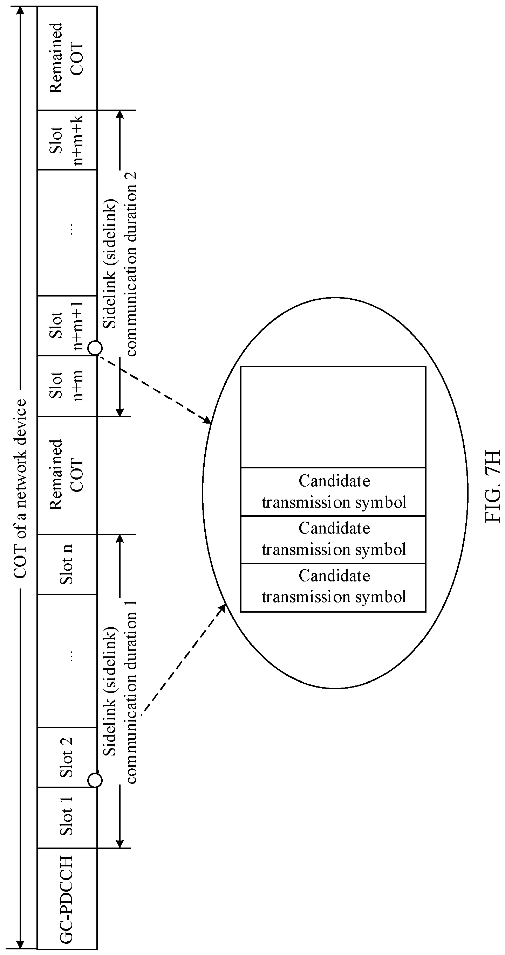

When the channel access mode indicated by the second configuration information is an LBE mode, and two sidelink communication durations are configured in the second configuration information, the second configuration information further includes a plurality of candidate transmission symbols in each sidelink communication duration. It should be noted that the network device may set same or different relative locations of candidate transmission symbols for different sidelink communication durations (for example, same or different boundaries relative to the corresponding sidelink communication durations). For example, as shown in FIG. 7H, the network device sets the first three symbols in the second slot in each sidelink communication duration as candidate transmission symbols.

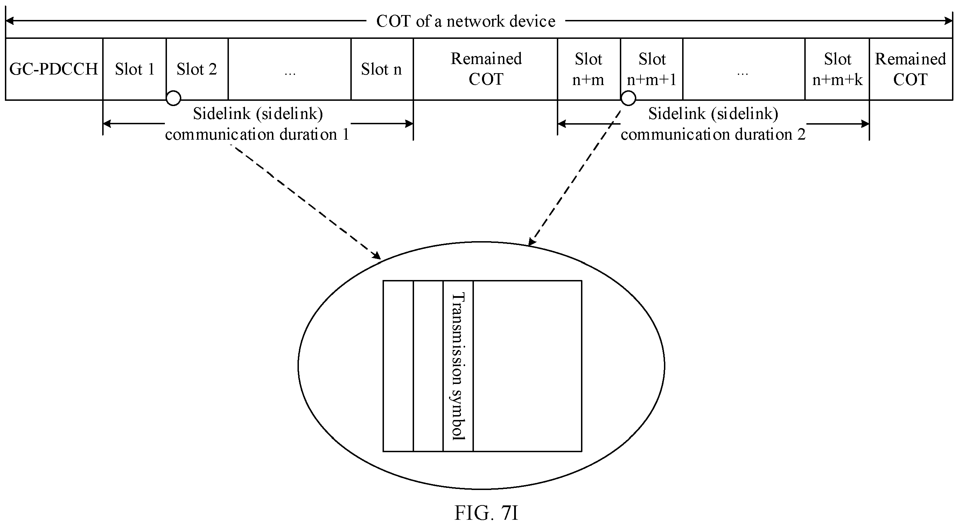

When the channel access mode indicated by the second configuration information is an LBE mode, and two sidelink communication durations are configured in the second configuration information, the second configuration information further includes one transmission symbol in each sidelink communication duration. It should be noted that the network device may set same or different relative locations of transmission symbols for different sidelink communication durations (for example, same or different boundaries relative to the corresponding sidelink communication durations). For example, as shown in FIG. 7I, the network device sets the third symbol in the second slot in each sidelink communication duration as a transmission symbol.

After receiving the first configuration information and the second configuration information, the terminal device performs sidelink communication based on the first configuration information and the second configuration information. For details, refer to the descriptions in the foregoing embodiments. The details are not described herein again.

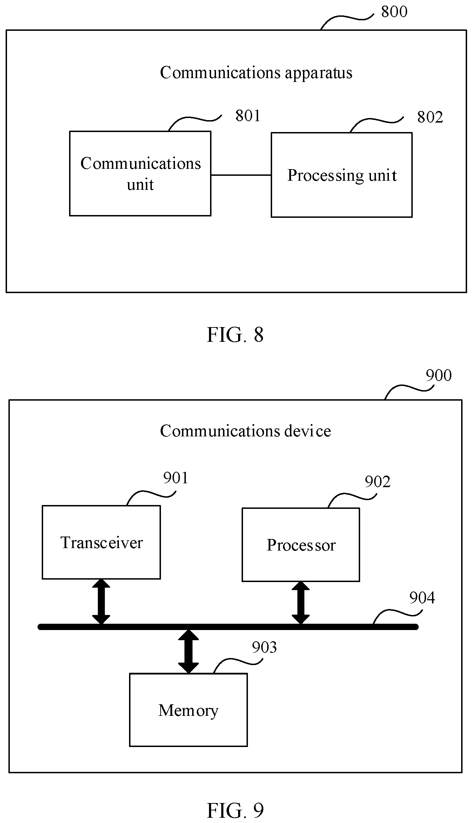

According to the foregoing embodiments, an embodiment of this application further provides a communications apparatus. A structure of the apparatus is shown in FIG. 8, and includes a communications unit 801 and a processing unit 802. The apparatus 800 may be applied to a network device or a terminal device, and may implement the communication method in the foregoing embodiments. The terminal device and the network device may be applied to the communications systems shown in FIG. 1A and FIG. IB.

Optionally, when the apparatus 800 is applied to the network device, functions of the units are as follows:

The processing unit 802 is configured to generate first configuration information, where the first configuration information indicates a channel access mode used when a terminal device that accesses the network device performs sidelink (sidelink) communication in an unlicensed frequency band.

The communications unit 801 sends the first configuration information.

In an implementation, the channel access mode is a load based equipment LBE mode or a frame based equipment FBE mode.

In an implementation, when sending the first configuration information, the communications unit 801 is specifically configured to:

broadcast the first configuration information; or
send the first configuration information to the terminal device.

In an implementation, when broadcasting the first configuration information, the communications unit 801 is specifically configured to:

broadcast system information, where the system information includes the first configuration information, and the system information includes a master information block MIB and/or remaining minimum system information RMSI; or
broadcast downlink control information DCI, where the DCI includes the first configuration information, and the DCI is sent through a group common physical downlink control channel GC-PDCCH.

In an implementation, when sending the first configuration information to the terminal device, the communications unit 801 is specifically configured to:
send radio resource control RRC signaling to the terminal device, where the RRC signaling includes the first configuration information.

In an implementation, the processing unit 802 is further configured to generate second configuration information.

The communications unit 801 is further configured to send the second configuration information, where the second configuration information includes at least one or a combination of the following:
configuration information of sidelink communication duration, maximum transmit power, and indication information of a frequency domain resource used for sidelink communication, where the frequency domain resource is in the unlicensed frequency band.

In an implementation, the processing unit 802 is further configured to generate second configuration information.

The communications unit 801 is further configured to send the second configuration information, where the second configuration information includes indication information of at least one BWP used for sidelink communication and at least one or a combination of the following corresponding to each BWP:

configuration information of sidelink communication duration, maximum transmit power, and indication information of a frequency domain resource used for sidelink communication in the BWP, where
the at least one BWP is in the unlicensed frequency band.

In an implementation, the configuration information of the sidelink communication duration includes a time length of the sidelink communication duration, period information of the sidelink communication duration, and a time offset of the sidelink communication duration relative to a radio frame boundary.

In an implementation, the configuration information of the sidelink communication duration includes a slot location used for sidelink communication in a time length of a channel occupancy time COT of the network device.

In an implementation, when the channel access mode indicated by the first configuration information is the FBE mode, the second configuration information further includes:
a time length of a channel occupancy time COT in a fixed frame period FFP and a time length of an idle period (idle period) in the fixed frame period FFP.

In an implementation, when the channel access mode indicated by the first configuration information is the LBE mode, the second configuration information further includes:

a plurality of candidate transmission symbols during the sidelink communication duration, where
any candidate transmission symbol is used by the terminal device to send sidelink data after listen before talk LBT succeeds.

In an implementation, when the channel access mode indicated by the first configuration information is the LBE mode, the second configuration information further includes:

one transmission symbol in the sidelink communication duration, where
the transmission symbol is used by the terminal device to send sidelink data after LBT succeeds.

In an implementation, when sending the second configuration information, the communications unit 801 is specifically configured to:

send the second configuration information through broadcast; or
send the second configuration information to the terminal device.

In an implementation, when sending the second configuration information through broadcast, the communications unit 801 is specifically configured to:

broadcast system information, where the system information includes the second configuration information, and the system information includes an MIB and/or RMSI; or
broadcast downlink control information DCI, where the DCI includes the second configuration information, and the DCI is sent through a GC-PDCCH.

In an implementation, when sending the second configuration information to the terminal device, the communications unit 801 is specifically configured to:
send RRC signaling to the terminal device, where the RRC signaling includes the second configuration information.
Optionally, when the apparatus 800 is applied to the terminal device, functions of the units are as follows:
The communications unit 801 is configured to receive first configuration information from a network device, where the first configuration information indicates a channel access mode used when the terminal device performs sidelink (sidelink) communication in an unlicensed frequency band.
The processing unit 802 is configured to perform sidelink communication in the unlicensed frequency band based on the channel access mode indicated by the first configuration information.
In an implementation, the channel access mode is a load based equipment LBE mode or a frame based equipment FBE mode.
In an implementation, when receiving the first configuration information from the network device, the communications unit 801 is specifically configured to:

receive the first configuration information that is broadcast by the network device; or
receive the first configuration information sent by the network device to the terminal device.

In an implementation, when receiving the first configuration information that is broadcast by the network device, the communications unit 801 is specifically configured to:

receive system information that is broadcast by the network device, where the system information includes the first configuration information, and the system information includes a master information block MIB and/or remaining minimum system information RMSI; or
receive downlink control information DCI that is broadcast by the network device, where the DCI includes the first configuration information, and the DCI is received through a group common physical downlink control channel GC-PDCCH.

In an implementation, when receiving the first configuration information sent by the network device to the terminal device, the communications unit 801 is specifically configured to:
receive radio resource control RRC signaling from the network device, where the RRC signaling includes the first configuration information.
In an implementation, the communications unit 801 is further configured to receive second configuration information from the network device, where the second configuration information includes at least one or a combination of the following: configuration information of sidelink communication duration, maximum transmit power, and indication information of a frequency domain resource used for sidelink communication, where the frequency domain resource is in the unlicensed frequency band.
The processing unit 802 is specifically configured to perform sidelink communication in the unlicensed frequency band based on the second configuration information.
In an implementation, the communications unit 801 is further configured to receive second configuration information from the network device, where the second configuration information includes indication information of at least one BWP used for sidelink communication and at least one or a combination of the following corresponding to each BWP: configuration information of sidelink communication duration, maximum transmit power, and indication information of a frequency domain resource used for sidelink communication in the BWP, where the at least one BWP is in the unlicensed frequency band.

The processing unit 802 is specifically configured to perform sidelink communication in the unlicensed frequency band based on the second configuration information.

In an implementation, the configuration information of the sidelink communication duration includes a time length of the sidelink communication duration, period information of the sidelink communication duration, and a time offset of first sidelink communication duration relative to a radio frame boundary.

In an implementation, the configuration information of the sidelink communication duration includes a slot location used for sidelink communication in a time length of a channel occupancy time COT of the network device.

In an implementation, when the channel access mode indicated by the first configuration information is the FBE mode, the second configuration information further includes:

a time length of a channel occupancy time COT in a fixed frame period FFP and a time length of an idle period (idle period) in the fixed frame period FFP.

In an implementation, when the channel access mode indicated by the first configuration information is the LBE mode, the second configuration information further includes:

a plurality of candidate transmission symbols during the sidelink communication duration, where
any candidate transmission symbol is used by the terminal device to send sidelink data after listen before talk LBT succeeds.

In an implementation, when the channel access mode indicated by the first configuration information is the LBE mode, the second configuration information further includes:

one transmission symbol in the sidelink communication duration, where
the transmission symbol is used by the terminal device to send sidelink data after LBT succeeds.

In an implementation, when receiving the second configuration information from the network device, the communications unit 801 is specifically configured to:

receive the second configuration information that is broadcast by the network device; or
receive the second configuration information sent by the network device to the terminal device.

In an implementation, when receiving the second configuration information that is broadcast by the network device, the communications unit 801 is specifically configured to:

receive system information that is broadcast by the network device, where the system information includes the second configuration information, and the system information includes an MIB and/or RMSI; or
receive downlink control information DCI that is broadcast by the network device, where the DCI includes the second configuration information, and the DCI is received through a GC-PDCCH.

In an implementation, when receiving the second configuration information sent by the network device to the terminal device, the communications unit 801 is specifically configured to:
receive RRC signaling from the network device, where the RRC signaling includes the second configuration information.

It should be noted that in the embodiments of this application, division into the modules is an example and is merely logical function division, and may be other division in an actual implementation. In addition, functional units in the embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

According to the foregoing embodiments, an embodiment of this application further provides a communications device. The communications device may be applied to a network device or a terminal device, and may implement the communication method in the foregoing embodiments. The terminal device and the network device may be applied to the communications systems shown in FIG. 1A and FIG. IB. Refer to FIG. 9. The communications device 900 includes a transceiver 901 and a processor 902. Optionally, the communications device 900 further includes a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 901 is configured to: receive and send data, to communicate with another device in the communications system. Optionally, the transceiver 901 may be implemented by using a radio frequency apparatus and an antenna.

In an implementation, the communications device 900 may be applied to the network device. The processor 902 is configured to implement functions of the network device in the communication methods in the foregoing figures. For details, refer to the descriptions in the foregoing embodiments. The details are not described herein again.

In an implementation, the communications device 900 may be applied to the terminal device. The processor 902 is configured to implement functions of the terminal device in the communication methods in the foregoing figures. For details, refer to the descriptions in the foregoing embodiments. The details are not described herein again.

The processor 902 may be a central processing unit (central processing unit, CPU), a network processor (network processor, NP), a combination of a CPU and an NP, or the like. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 902 may implement the foregoing functions by hardware or certainly by hardware executing corresponding software.

The memory 903 is configured to store program instructions and the like. Specifically, the program instructions may include program code, and the program code includes a computer operation instruction. The memory 903 may include a random access memory (random access memory, RAM), or may include a non-volatile memory (non-volatile memory), for example, at least one magnetic disk memory. The processor 902 executes the program instructions stored in the memory 903, to implement the foregoing functions, so as to implement the communication methods provided in the foregoing embodiments.

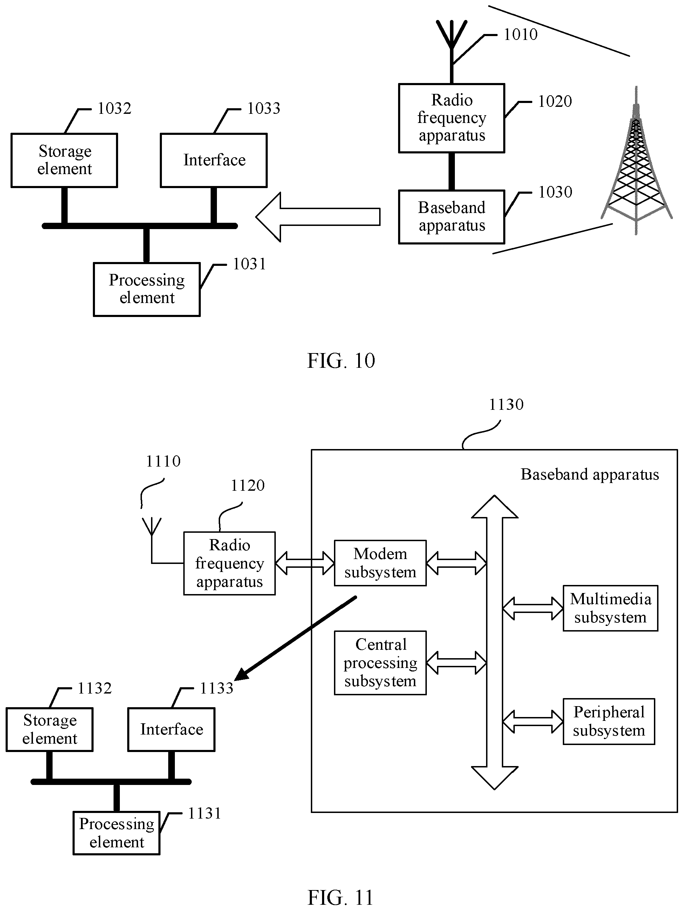

According to the foregoing embodiments, an embodiment of this application further provides a network device. Refer to FIG. 10. The network device may be applied to the systems shown in FIG. 1A and FIG. 1B, to perform functions of the network device in the foregoing method embodiments. As shown in FIG. 10, the network device includes an antenna 1010, a radio frequency apparatus 1020, and a baseband apparatus 1030. The antenna 1010 is connected to the radio frequency apparatus 1020. In an uplink direction, the radio frequency apparatus 1020 receives, by using the antenna 1010, information sent by a terminal device; and sends, to the baseband apparatus 1030 for processing, the information sent by the terminal device. In a downlink direction, the baseband apparatus 1030 processes to-be-sent information, and sends processed information to the radio frequency apparatus 1020. The radio frequency apparatus 1020 processes the information, and then sends processed information by using the antenna 1010.

The baseband apparatus 1030 may be a physical apparatus, or may include at least two physically separated apparatuses, for example, including a CU and at least one DU. The DU and the radio frequency apparatus 1020 may be integrated into an apparatus, or may be physically separated. Division of the baseband apparatus 1030 at a protocol layer between the at least two physically separated apparatuses is not limited. For example, the baseband apparatus 1030 is configured to perform processing on protocol layers such as an RRC layer, a PDCP layer, an RLC layer, a MAC layer, and a physical layer, and may be divided between any two protocol layers. Therefore, the baseband apparatus includes two physically separated apparatuses that are respectively configured to perform processing on protocol layers for which the two physically separated apparatuses are responsible. For example, the baseband apparatus is divided between the RRC layer and the PDCP layer. For another example, the baseband apparatus may be divided between the PDCP layer and the RLC layer. In addition, the baseband apparatus may be divided at a protocol layer. For example, a part of a protocol layer and a protocol layer above the protocol layer are assigned to an apparatus, and a remaining part of the protocol layer and a protocol layer below the protocol layer are assigned to another apparatus. The network device may be located on one of the at least two physically separated apparatuses in the baseband apparatus 1030.

The network device may include a plurality of baseband boards. A plurality of processing elements may be integrated on the baseband board to implement required functions. The baseband apparatus 1030 may include at least one baseband board.

In an implementation, the units shown in FIG. 8 are implemented by scheduling a program by a processing element. For example, the baseband apparatus 1030 includes a processing element 1031 and a storage element 1032, and the processing element 1031 invokes a program stored in the storage element 1032, to perform the method performed by the network device in the foregoing method embodiments. In addition, the baseband apparatus 1030 may further include an interface 1033, configured to exchange information with the radio frequency apparatus 1020. The interface is, for example, a common public radio interface (common public radio interface, CPRI). When the baseband apparatus 1030 and the radio frequency apparatus 1020 are physically disposed together, the interface 1033 may be an intra-board interface or an inter-board interface. The board herein is a circuit board.

In another implementation, the units shown in FIG. 8 may be one or more processing elements configured to implement the method performed by the network device. The processing elements are disposed in the baseband apparatus 1030. The processing elements herein may be integrated circuits, for example, one or more ASICs, one or more DSPs, or one or more FPGAs. These integrated circuits may be integrated together to form a chip.

For example, the units shown in FIG. 8 may be integrated in a form of a system-on-a-chip (system-on-a-chip, SOC). For example, the baseband apparatus 1030 includes an SOC chip, to implement the foregoing method. The processing element 1031 and the storage element 1032 may be integrated into the chip, and the processing element 1031 invokes the program stored in the storage element 1032, to implement the method performed by the network device or the functions of the units shown in FIG. 8. Alternatively, at least one integrated circuit may be integrated into the chip, to implement the method performed by the network device or the functions of the units shown in FIG. 8. Alternatively, with reference to the foregoing implementations, functions of some units may be implemented by invoking the program by the processing element, and functions of some units may be implemented in a form of an integrated circuit.

In any manner, in conclusion, the network device includes at least one processing element and a storage element, and the at least one processing element is configured to perform the method performed by the network device provided in the foregoing method embodiment. The processing element may perform, in Manner 1, that is, in a manner of executing a program stored in the storage element, some or all of the steps performed by the network device in the foregoing method embodiment, may perform, in Manner 2, that is, in a manner of combining an integrated logical circuit of hardware in the processing element with an instruction, some or all of the steps performed by the network device in the foregoing method embodiment, or certainly may perform, by combining Manner 1 and Manner 2, some or all of the steps performed by the network device in the foregoing method embodiment.

The processing element herein is the same as that described above, and may be a general-purpose processor such as a central processing unit (Central Processing Unit, CPU), or may be one or more integrated circuits configured to implement the foregoing method, for example, one or more application-specific integrated circuits (Application-Specific Integrated Circuits, ASICs), one or more digital signal processors (digital signal processors, DSPs), or one or more field programmable gate arrays (Field Programmable Gate Arrays, FPGAs).

The storage element may be one memory, or may be a general term of a plurality of storage elements.

According to the foregoing embodiments, an embodiment of this application further provides a terminal device. Refer to FIG. 11. The terminal device may be applied to the systems shown in FIG. 1A and FIG. 1B, to perform functions of the terminal device in the foregoing method embodiments. As shown in FIG. 11, the terminal device includes an antenna 1110, a radio frequency apparatus 1120, and a baseband apparatus 1130. The antenna 1110 is connected to the radio frequency apparatus 1120. In a downlink direction, the radio frequency apparatus 1120 receives, by using the antenna 1110, information sent by a network device, and sends, to the baseband apparatus 1130 for processing, the information sent by the network device. In an uplink direction, the baseband apparatus 1130 processes to-be-sent information, and sends processed information to the radio frequency apparatus 1120. The radio frequency apparatus 1120 processes the information about the terminal device, and then sends processed information to the network device by using the antenna 1110.

The baseband apparatus 1130 may include a modem subsystem, configured to implement processing on each communications protocol layer for data. The terminal device may further include a central processing subsystem, configured to implement processing on an operating system of the terminal device and an application layer. In addition, the terminal device may further include other subsystems such as a multimedia subsystem and a peripheral subsystem. The multimedia subsystem is configured to control a camera or a screen display of the terminal, and the peripheral subsystem is configured to implement a connection to another device. The modem subsystem may be an independently disposed chip. Optionally, functions of the terminal device may be implemented in the modem subsystem.

In an implementation, the units shown in FIG. 8 are implemented by scheduling a program by a processing element. For example, a subsystem such as the modem subsystem of the baseband apparatus 1130 includes a processing element 1131 and a storage element 1132. The processing element 1131 invokes a program stored in the storage element 1132, to perform the method performed by the terminal device in the foregoing method embodiment. In addition, the baseband apparatus 1130 may further include an interface 1133, configured to exchange information with the radio frequency apparatus 1120.

In another implementation, the units shown in FIG. 8 may be one or more processing elements configured to implement the method performed by the terminal device. The processing elements are disposed on a subsystem such as the modem subsystem of the baseband apparatus 1130. The processing elements herein may be integrated circuits, for example, one or more ASICs, one or more DSPs, or one or more FPGAs. These integrated circuits may be integrated together to form a chip.

For example, the units shown in FIG. 8 may be integrated in a form of a system-on-a-chip (system-on-a-chip, SOC). For example, the baseband apparatus 1130 includes an SOC chip, to implement the foregoing method. The processing element 1131 and the storage element 1132 may be integrated into the chip, and the processing element 1131 invokes the program stored in the storage element 1132, to implement the method performed by the terminal device or the functions of the units shown in FIG. 8. Alternatively, at least one integrated circuit may be integrated into the chip, to implement the method performed by the terminal device or the functions of the units shown in FIG. 8. Alternatively, with reference to the foregoing implementations, functions of some units may be implemented by invoking a program by the processing element, and functions of some units may be implemented in a form of an integrated circuit.

In any manner, in conclusion, the terminal device includes at least one processing element and a storage element, and the at least one processing element is configured to perform the method performed by the terminal device provided in the foregoing method embodiment. The processing element may perform, in Manner 1, that is, in a manner of executing a program stored in the storage element, some or all of the steps performed by the terminal device in the foregoing method embodiment, may perform, in Manner 2, that is, in a manner of combining an integrated logical circuit of hardware in the processing element with an instruction, some or all of the steps performed by the terminal device in the foregoing method embodiment, or certainly may perform, by combining Manner 1 and Manner 2, some or all of the steps performed by the terminal device in the foregoing method embodiment.

The processing element herein is the same as that described above, and may be a general-purpose processor such as a central processing unit (Central Processing Unit, CPU), or may be one or more integrated circuits configured to implement the foregoing method, for example, one or more application-specific integrated circuits (Application-Specific Integrated Circuit, ASIC), one or more digital signal processors (digital signal processor, DSP), or one or more field programmable gate arrays (Field Programmable Gate Array, FPGA).

The storage element may be one memory, or may be a general term of a plurality of storage elements.

According to the foregoing embodiments, an embodiment of this application further provides a computer program. When the computer program is run on a computer, the computer is enabled to perform the communication method provided in the foregoing embodiments.

According to the foregoing embodiments, an embodiment of this application further provides a computer storage medium. The computer storage medium stores a computer program. When the computer program is executed by a computer, the computer is enabled to perform the communication method provided in the foregoing embodiments.

According to the foregoing embodiments, an embodiment of this application further provides a chip. The chip is configured to read a computer program stored in a memory, to implement the communication method provided in the foregoing embodiments.

According to the foregoing embodiments, an embodiment of this application provides a chip system. The chip system includes a processor, configured to support a computer apparatus in implementing the functions related to the communications device or the network device in the foregoing embodiments. In a possible design, the chip system further includes a memory. The memory is configured to store a program and data that are necessary for the computer apparatus. The chip system may include a chip, or may include a chip and another discrete component.

In conclusion, embodiments of this application provide a communication method. In this method, a network device in a communications system may send configuration information, to indicate a channel access mode used when a terminal device performs sidelink communication in an unlicensed frequency band. After receiving the configuration information, the terminal device that accesses the network device may perform sidelink communication in the unlicensed frequency band based on the channel access mode indicated by the configuration information. According to this solution, the terminal device in the communications system may implement sidelink communication in the unlicensed frequency band.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and equivalent technologies thereof.

## Claims

1. A communication method, comprising:
   sending, by a network device, first configuration information, wherein the first configuration information indicates a channel access mode used when a terminal device that accesses the network device performs sidelink (sidelink) communication in an unlicensed frequency band.

2. The method according to claim 1, wherein the channel access mode is a load based equipmentLBE mode or a frame based equipment FBE mode.

3. The method according to claim 1 or 2, wherein the method further comprises:
   sending, by the network device, second configuration information, wherein the second configuration information comprises at least one or a combination of the following:
   configuration information of sidelink communication duration, maximum transmit power, and indication information of a frequency domain resource used for sidelink communication, wherein the frequency domain resource is in the unlicensed frequency band.

4. The method according to claim 1 or 2, wherein the method further comprises:
   sending, by the network device, second configuration information, wherein the second configuration information comprises indication information of at least one bandwidth part BWP used for sidelink communication and at least one or a combination of the following corresponding to each BWP:
   configuration information of sidelink communication duration, maximum transmit power, and indication information of a frequency domain resource used for sidelink communication in the BWP, wherein the at least one BWP is in the unlicensed frequency band.

5. A communication method, comprising:

   receiving, by a terminal device, first configuration information from a network device, wherein the first configuration information indicates a channel access mode used when the terminal device performs sidelink (sidelink) communication in an unlicensed frequency band; and
   performing, by the terminal device, sidelink communication in the unlicensed frequency band based on the channel access mode indicated by the first configuration information.

6. The method according to claim 5, wherein the channel access mode is a load based equipment LBE mode or a frame based equipment FBE mode.

7. The method according to claim 5 or 6, wherein the method further comprises:

   receiving, by the terminal device, second configuration information from the network device, wherein the second configuration information comprises at least one or a combination of the following: configuration information of sidelink communication duration, maximum transmit power, and indication information of a frequency domain resource used for sidelink communication, wherein the frequency domain resource is in the unlicensed frequency band; and
the performing, by the terminal device, sidelink communication in the unlicensed frequency band comprises: performing, by the terminal device, sidelink communication in the unlicensed frequency band based on the second configuration information.

8.  The method according to claim 5 or 6, wherein the method further comprises:

    receiving, by the terminal device, second configuration information from the network device, wherein the second configuration information comprises indication information of at least one bandwidth part BWP used for sidelink communication and at least one or a combination of the following corresponding to each BWP: configuration information of sidelink communication duration, maximum transmit power, and indication information of a frequency domain resource used for sidelink communication in the BWP, wherein the at least one BWP is in the unlicensed frequency band; and
    the performing, by the terminal device, sidelink communication in the unlicensed frequency band comprises: performing, by the terminal device, sidelink communication in the unlicensed frequency band based on the second configuration information.

9.  The method according to any one of claim 3, claim 4, claim 7, or claim 8, wherein the configuration information of the sidelink communication duration comprises a time length of the sidelink communication duration, period information of the sidelink communication duration, and a time offset of the sidelink communication duration relative to a radio frame boundary.

10. The method according to claim 3 or 7, wherein the configuration information of the sidelink communication duration comprises a slot location used for sidelink communication in a time length of a channel occupancy time COT of the network device.

11. The method according to any one of claim 3, claim 4, or claims 7 to 10, wherein when the channel access mode indicated by the first configuration information is the FBE mode, the second configuration information further comprises:
    a time length of a channel occupancy time COT in a fixed frame period FFP and a time length of an idle period (idle period) in the fixed frame period FFP.

12. The method according to any one of claim 3, claim 4, or claims 7 to 10, wherein when the channel access mode indicated by the first configuration information is the LBE mode, the second configuration information further comprises:

    a plurality of candidate transmission symbols during the sidelink communication duration, wherein
    any candidate transmission symbol is used by the terminal device to send sidelink data after listen before talk LBT succeeds.

13. The method according to any one of claim 3, claim 4, or claims 7 to 10, wherein when the channel access mode indicated by the first configuration information is the LBE mode, the second configuration information further comprises:

    one transmission symbol in the sidelink communication duration, wherein
    the transmission symbol is used by the terminal device to send sidelink data after LBT succeeds.

14. A network device, comprising:

    a transceiver, configured to: receive and send a signal; and
    a processor, configured to send first configuration information by using the transceiver, wherein the first configuration information indicates a channel access mode used when a terminal device that accesses the network device performs sidelink (sidelink) communication in an unlicensed frequency band.

15. The network device according to claim 14, wherein the channel access mode is a load based equipment LBE mode or a frame based equipment FBE mode.

16. The network device according to claim 14 or 15, wherein the processor is further configured to:
send second configuration information by using the transceiver, wherein the second configuration information comprises at least one or a combination of the following:
configuration information of sidelink communication duration, maximum transmit power, and indication information of a frequency domain resource used for sidelink communication, wherein the frequency domain resource is in the unlicensed frequency band.

17. The network device according to claim 14 or 15, wherein the processor is further configured to:
send second configuration information by using the transceiver, wherein the second configuration information comprises indication information of at least one bandwidth part BWP used for sidelink communication and at least one or a combination of the following corresponding to each BWP:
configuration information of sidelink communication duration, maximum transmit power, and indication information of a frequency domain resource used for sidelink communication in the BWP, wherein the at least one BWP is in the unlicensed frequency band.

18. A terminal device, comprising:

a transceiver, configured to: receive and send a signal; and
a processor, configured to: receive first configuration information from a network device by using the transceiver, wherein the first configuration information indicates a channel access mode used when the terminal device performs sidelink (sidelink) communication in an unlicensed frequency band; and perform sidelink communication in the unlicensed frequency band based on the channel access mode indicated by the first configuration information.

19. The terminal device according to claim 18, wherein the channel access mode is a load based equipment LBE mode or a frame based equipment FBE mode.

20. The terminal device according to claim 18 or 19, wherein the processor is further configured to:

receive second configuration information from the network device by using the transceiver, wherein the second configuration information comprises at least one or a combination of the following: configuration information of sidelink communication duration, maximum transmit power, and indication information of a frequency domain resource used for sidelink communication, wherein the frequency domain resource is in the unlicensed frequency band; and
perform sidelink communication in the unlicensed frequency band based on the second configuration information.

21. The terminal device according to claim 18 or 19, wherein the processor is further configured to:

receive second configuration information from the network device by using the transceiver, wherein the second configuration information comprises indication information of at least one bandwidth part BWP used for sidelink communication and at least one or a combination of the following corresponding to each BWP: configuration information of sidelink communication duration, maximum transmit power, and indication information of a frequency domain resource used for sidelink communication in the BWP, wherein the at least one BWP is in the unlicensed frequency band; and
perform sidelink communication in the unlicensed frequency band based on the second configuration information.

22. The device according to any one of claim 16, claim 17, claim 20, or claim 21, wherein the configuration information of the sidelink communication duration comprises a time length of the sidelink communication duration, period information of the sidelink communication duration, and a time offset of the sidelink communication duration relative to a radio frame boundary

23. The device according to claim 16 or 20, wherein the configuration information of the sidelink communication duration comprises a slot location used for sidelink communication in a time length of a channel occupancy time COT of the network device.

24. The device according to any one of claim 16, claim 17, or claims 20 to 23, wherein when the channel access mode indicated by the first configuration information is the FBE mode, the second configuration information further comprises:

a time length of a channel occupancy time COT in a fixed frame period FFP and a time length of an idle period (idle period) in the fixed frame period FFP.

25. The device according to any one of claim 16, claim 17, or claims 20 to 23, wherein when the channel access mode indicated by the first configuration information is the LBE mode, the second configuration information further comprises:

a plurality of candidate transmission symbols during the sidelink communication duration, wherein any candidate transmission symbol is used by the terminal device to send sidelink data after listen before talk LBT succeeds.

26. The device according to any one of claim 16, claim 17, or claims 20 to 23, wherein when the channel access mode indicated by the first configuration information is the LBE mode, the second configuration information further comprises:

one transmission symbol in the sidelink communication duration, wherein the transmission symbol is used by the terminal device to send sidelink data after LBT succeeds.

27. A communications apparatus, applied to a network device, and comprising:

a communications unit, configured to: receive and send a signal; and a processing unit, configured to send first configuration information by using the communications unit, wherein the first configuration information indicates a channel access mode used when a terminal device that accesses the network device performs sidelink (sidelink) communication in an unlicensed frequency band.

28. The apparatus according to claim 27, wherein the channel access mode is a load based equipment LBE mode or a frame based equipment FBE mode.

29. The apparatus according to claim 27 or 28, wherein the processing unit is further configured to:
send second configuration information by using the communications unit, wherein the second configuration information comprises at least one or a combination of the following:
configuration information of sidelink communication duration, maximum transmit power, and indication information of a frequency domain resource used for sidelink communication, wherein the frequency domain resource is in the unlicensed frequency band.

30. The apparatus according to claim 27 or 28, wherein the processing unit is further configured to:
send second configuration information by using the communications unit, wherein the second configuration information comprises indication information of at least one bandwidth part BWP used for sidelink communication and at least one or a combination of the following corresponding to each BWP:
configuration information of sidelink communication duration, maximum transmit power, and indication information of a frequency domain resource used for sidelink communication in the BWP, wherein the at least one BWP is in the unlicensed frequency band.

31. A communications apparatus, applied to a terminal device, and comprising:

a communications unit, configured to: receive and send a signal; and a processing unit, configured to receive first configuration information from a network device by using the communications unit, wherein the first configuration information indicates a channel access mode used when the terminal device performs sidelink (sidelink) communication in an unlicensed frequency band; and perform sidelink communication in the unlicensed frequency band based on the channel access mode indicated by the first configuration information.

32. The apparatus according to claim 31, wherein the channel access mode is a load based equipment LBE mode or a frame based equipment FBE mode.

33. The apparatus according to claim 31 or 32, wherein the processing unit is further configured to:

receive second configuration information from the network device by using the communications unit, wherein the second configuration information comprises at least one or a combination of the following: configuration information of sidelink communication duration, maximum transmit power, and indication information of a frequency domain resource used for sidelink communication, wherein the frequency domain resource is in the unlicensed frequency band; and
perform sidelink communication in the unlicensed frequency band based on the second configuration information.

34. The apparatus according to claim 31 or 32, wherein the processing unit is further configured to:

receive second configuration information from the network device by using the communications unit, wherein the second configuration information comprises indication information of at least one bandwidth part BWP used for sidelink communication and at least one or a combination of the following corresponding to each BWP: configuration information of sidelink communication duration, maximum transmit power, and indication information of a frequency domain resource used for sidelink communication in the BWP, wherein the at least one BWP is in the unlicensed frequency band; and
perform sidelink communication in the unlicensed frequency band based on the second configuration information.

35. The apparatus according to any one of claim 29, claim 30, claim 33, or claim 34, wherein the configuration information of the sidelink communication duration comprises a time length of the sidelink communication duration, period information of the sidelink communication duration, and a time offset of the sidelink communication duration relative to a radio frame boundary

36. The apparatus according to claim 29 or 33, wherein the configuration information of the sidelink communication duration comprises a slot location used for sidelink communication in a time length of a channel occupancy time COT of the network device.

37. The apparatus according to any one of claim 29, claim 30, or claims 33 to 36, wherein when the channel access mode indicated by the first configuration information is the FBE mode, the second configuration information further comprises:
a time length of a channel occupancy time COT in a fixed frame period FFP and a time length of an idle period (idle period) in the fixed frame period FFP.

38. The apparatus according to any one of claim 29, claim 30, or claims 33 to 36, wherein when the channel access mode indicated by the first configuration information is the LBE mode, the second configuration information further comprises:

a plurality of candidate transmission symbols during the sidelink communication duration, wherein
any candidate transmission symbol is used by the terminal device to send sidelink data after listen before talk LBT succeeds.

39. The apparatus according to any one of claim 29, claim 30, or claims 33 to 36, wherein when the channel access mode indicated by the first configuration information is the LBE mode, the second configuration information further comprises:

one transmission symbol in the sidelink communication duration, wherein
the transmission symbol is used by the terminal device to send sidelink data after LBT succeeds.

40. A computer storage medium, wherein the computer storage medium stores computer executable instructions, and when the computer executable instructions are invoked by a computer, the computer is enabled to perform the method according to any one of claims 1 to 13.

41. A computer program product, wherein when the computer program product runs on a computer, the computer is enabled to perform the method according to any one of claims 1 to 13.

FIG. 1A

FIG. 1B

FFP

CCA | Signal transmission | CCA | Signal transmission

Idle period

COT

Idle period

COT

FIG. 2

Network device

Terminal device

S301: First configuration request

S302: First configuration information

S303: Second configuration request

S304: Second configuration information

S305: Perform sidelink (sidelink) communication

FIG. 3

Sidelink (sidelink) communication duration 1

Sidelink (sidelink) communication duration 2

...

Time offset

← Time length →

← Time length →

Period of sidelink (sidelink) communication duration

Radio frame boundary

Radio frame boundary

FIG. 4A

Sidelink (sidelink) communication duration 1

Sidelink (sidelink) communication duration 2

...

Time offset

← Time length →

Time interval

← Time length →

Radio frame boundary

Radio frame boundary

FIG. 4B

Sidelink
(sidelink)
communication
duration
corresponding
to a BWP 1

Time
offset

| Sidelink (sidelink) communication duration 1 | Sidelink (sidelink) communication duration 2 | ... |

← Time length →    ← Time length →

Period of sidelink (sidelink)
communication duration

⋮

Sidelink
(sidelink)
communication
duration
corresponding
to a BWP x

Time
offset

| Sidelink (sidelink) communication duration 1 | Sidelink (sidelink) communication duration 2 | ... |

← Time length →    ← Time length →

Period of sidelink (sidelink)
communication duration

Radio frame
boundary

Radio frame
boundary

FIG. 4C

Sidelink (sidelink) communication duration corresponding to a BWP 1

Time offset

Sidelink (sidelink) communication duration 1

Time length

Time interval

Sidelink (sidelink) communication duration 2

Time length

...

⋮

Sidelink (sidelink) communication duration corresponding to a BWP x

Time offset

Sidelink (sidelink) communication duration 1

Time length

Time interval

Sidelink (sidelink) communication duration 2

Time length

...

Radio frame boundary

Radio frame boundary

FIG. 4D

COT of a network device

| GC-PDCCH | Remained (remained) COT | | ... | | Remained (remained) COT |

Slot m

Sidelink (sidelink) communication duration

Slot m+p

FIG. 4E

GC-PDCCH

Remained (remained) COT

Slot m

Sidelink (sidelink) communication duration 1

Remained COT

Slot m+p

Slot n

Sidelink (sidelink) communication duration 2

Remained (remained) COT

Slot n+q

COT of a network device

FIG. 4F

FIG. 5

Sidelink (sidelink) communication duration

Transmission symbol

CW 1 | Send sidelink (sidelink) data

LBT start moment of a terminal device 1

CW 2 | Send sidelink (sidelink) data

LBT start moment of a terminal device 2

FIG. 6

FIG. 7A

FIG. 7B

FIG. 7C

| COT of a network device | | | | | | |
|---|---|---|---|---|---|---|
| GC-PDCCH | Idle period | COT | ... | Idle period | COT | Remained COT |

Sidelink (sidelink) communication duration

FIG. 7D

| COT of a network device | | | | | | |
|---|---|---|---|---|---|---|
| GC-PDCCH | Slot a | Slot a+1 | Slot a+2 | ... | Slot b | Remained COT |

Sidelink (sidelink) communication duration

| Candidate transmission symbol | Candidate transmission symbol | Candidate transmission symbol | |
|---|---|---|---|

FIG. 7E

| COT of a network device | | | | | | |
|---|---|---|---|---|---|---|
| GC-PDCCH | Slot a | Slot a+1 | Slot a+2 | ... | Slot b | Remained COT |

Sidelink (sidelink) communication duration

Transmission symbol

FIG. 7F

EP 3 952 355 A1

| | | | | | | | | | | | |
|---|---|---|---|---|---|---|---|---|---|---|---|
| GC-PDCCH | Idle period | COT | ... | Idle period | COT | Remained COT | Idle period | COT | ... | Idle period | COT | Remained COT |

COT of a network device

Sidelink (sidelink) communication duration 1

Sidelink (sidelink) communication duration 2

FIG. 7G

COT of a network device

| GC-PDCCH | Slot 1 | Slot 2 | ... | Slot n | Remained COT | Slot n+m | Slot n+m+1 | ... | Slot n+m+k | Remained COT |

Sidelink (sidelink) communication duration 1

Sidelink (sidelink) communication duration 2

Candidate transmission symbol

Candidate transmission symbol

Candidate transmission symbol

Candidate transmission symbol

FIG. 7H

| COT of a network device | | | | | | | | | |
|---|---|---|---|---|---|---|---|---|---|
| GC-PDCCH | Slot 1 | Slot 2 | ... | Slot n | Remained COT | Slot n+m | Slot n+m+1 | ... | Slot n+m+k | Remained COT |

Sidelink (sidelink) communication duration 1

Sidelink (sidelink) communication duration 2

Transmission symbol

FIG. 7I

800

Communications apparatus

801

Communications unit

802

Processing unit

FIG. 8

900

Communications device

901

Transceiver

902

Processor

904

903

Memory

FIG. 9

FIG. 10

FIG. 11

## INTERNATIONAL SEARCH REPORT

| | |
|---|---|
| International application No. | |
| | **PCT/CN2020/090301** |

### A. CLASSIFICATION OF SUBJECT MATTER

H04W 4/40(2018.01)i; H04W 4/70(2018.01)i; H04W 74/00(2009.01)i; H04W 74/08(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 侧链传输, 侧链路, 边链路, 未授权, 未许可, 指示, 基于负载, 基于帧结构, sidelink, side link, LBE, FBE, unlicensed, unauthorized, indicat+, BWP

### C. DOCUMENTS CONSIDERED TO BE RELEVANT

| Category* | Citation of document, with indication, where appropriate, of the relevant passages | Relevant to claim No. |
|---|---|---|
| X | WO 2018113676 A1 (HUAWEI TECHNOLOGIES CO., LTD.) 28 June 2018 (2018-06-28) description, paragraphs [0045]-[0303] | 1-41 |
| A | WO 2018113678 A1 (HUAWEI TECHNOLOGIES CO., LTD.) 28 June 2018 (2018-06-28) entire document | 1-41 |
| A | CN 109156037 A (HUAWEI TECHNOLOGIES CO., LTD.) 04 January 2019 (2019-01-04) entire document | 1-41 |
| A | US 2018092128 A1 (ELECTRONICS AND TELECOMMUNICATIONS RESEARCH INSTITUTE) 29 March 2018 (2018-03-29) entire document | 1-41 |
| A | HUAWEI et al. "Sidelink Support & Enhancements for NR" *3GPP TSG RAN WG1 Meeting #86 R1-167207*, 26 August 2016 (2016-08-26), entire document | 1-41 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 August 2020** | **12 August 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**EP 3 952 355 A1**

| INTERNATIONAL SEARCH REPORT<br>Information on patent family members | | | | International application No.<br>**PCT/CN2020/090301** | | | |
|---|---|---|---|---|---|---|---|
| Patent document<br>cited in search report | | | Publication date<br>(day/month/year) | Patent family member(s) | | | Publication date<br>(day/month/year) |
| WO | 2018113676 | A1 | 28 June 2018 | US | 2019274054 | A1 | 05 September 2019 |
| | | | | CN | 110100466 | A | 06 August 2019 |
| | | | | EP | 3549364 | A1 | 09 October 2019 |
| | | | | IN | 201917025140 | A | 23 August 2019 |
| WO | 2018113678 | A1 | 28 June 2018 | CN | 110100462 | A | 06 August 2019 |
| | | | | EP | 3549360 | A1 | 09 October 2019 |
| | | | | US | 2020084812 | A1 | 12 March 2020 |
| | | | | US | 2018176955 | A1 | 21 June 2018 |
| | | | | IN | 201937025458 | A | 23 August 2019 |
| CN | 109156037 | A | 04 January 2019 | EP | 3443803 | A1 | 20 February 2019 |
| | | | | US | 2017339530 | A1 | 23 November 2017 |
| | | | | WO | 2017198175 | A1 | 23 November 2017 |
| | | | | IN | 201847043402 | A | 30 November 2018 |
| US | 2018092128 | A1 | 29 March 2018 | KR | 20160121391 | A | 19 October 2016 |
| | | | | WO | 2016163657 | A1 | 13 October 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910399915